(19) Europäisches Patentamt
European Patent Office
Office européen des brevets

(11) **EP 4 651 333 A1**

(12) **DEMANDE DE BREVET EUROPEEN**

(43) Date de publication:
**19.11.2025 Bulletin 2025/47**

(21) Numéro de dépôt: **25174057.7**

(22) Date de dépôt: **02.05.2025**

(51) Classification Internationale des Brevets (IPC):
*H02J 3/24* (2006.01)   *H02J 3/32* (2006.01)
*H02J 3/38* (2006.01)   *H02J 3/48* (2006.01)

(52) Classification Coopérative des Brevets (CPC):
**H02J 3/48; H02J 3/241; H02J 3/32; H02J 3/381**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **15.05.2024 FR 2404985**

(71) Demandeur: **Commissariat à l'Energie Atomique et aux Energies Alternatives**
**75015 Paris (FR)**

(72) Inventeur: **PAÏS, Grégory**
**38054 GRENOBLE CEDEX 09 (FR)**

(74) Mandataire: **INNOV-GROUP**
**209 Avenue Berthelot**
**69007 Lyon (FR)**

(54) **COMMANDE D'UNE PUISSANCE FOURNIE A UN RÉSEAU DE DISTRIBUTION D'ENERGIE ÉLECTRIQUE, PAR UN CONTRÔLEUR D'HYBRIDATION**

(57) Pour piloter l'hybridation d'un groupe de production électrique comportant une unité de production d'énergie électrique (1) et une unité de stockage d'énergie (2), un contrôleur d'hybridation (34) comprend un contrôleur à inférences (343) qui reçoit entrée un premier signal (ESS_SOC) représentatif de l'état de charge de l'unité de stockage, un deuxième signal ($P_{ESS}$) représentatif de la puissance stockée ou restituée par l'unité de stockage et un troisième signal d'entrée représentatif de la dérivée temporelle de la puissance ($P_{HPP\_FCR}$) produite par l'unité de production, et produit en sortie un signal ($F\_HPPn$) de consigne de la puissance produite par l'unité de production au titre de sa contribution au réglage primaire de fréquence du réseau électrique (3). Le contrôleur d'hybridation (34) est configuré pour piloter la puissance ($P_{ESS}$) stockée ou restituée par l'unité de stockage d'énergie (2) à partir de la différence (342) entre la puissance de réglage primaire de fréquence ($P_{FCR}$) attendue du groupe de production au titre de sa contribution au réglage primaire de fréquence du réseau électrique (3) et de la puissance ($P_{HPP\_FCR}$) produite à ce titre par l'unité de production d'énergie électrique (1).

Fig.3

## Description

### Domaine technique

L'invention se rapporte de manière générale au domaine de la production d'énergie électrique et de la gestion des réseaux de distribution d'énergie électrique. Elle concerne plus particulièrement les stratégies mises en œuvre au sein des centrales de production électrique pour maintenir la stabilité en fréquence des réseaux de distribution d'énergie électrique.

Plus spécifiquement, l'invention a pour objet la commande de la puissance délivrée par un groupe de production d'énergie électrique à un réseau de distribution d'énergie électrique sous une tension alternative de fréquence nominale déterminée, ledit groupe de production d'énergie électrique comprenant une unité de production d'énergie électrique pilotable ayant un temps de réponse relativement long à une variation de consigne de la puissance produite ainsi qu'une unité de stockage d'énergie pilotable ayant un temps de réponse relativement rapide à une variation de consigne de la puissance stockée ou restituée, pilotés par un contrôleur d'hybridation configuré pour assurer la gestion du groupe de production électrique et sa contribution au réglage primaire de la fréquence de la tension alternative en fonction d'une déviation de ladite fréquence par rapport à la fréquence nominale.

### Etat de la technique

L'énergie électrique est transportée dans les réseaux de distribution d'énergie électrique sous une tension alternative de fréquence nominale déterminée, à savoir 50 Hertz (Hz) en Europe ou 60 Hz dans d'autres zones géographiques. On parle communément de "fréquence du réseau" pour désigner la fréquence en question.

La gestion des réseaux de distribution d'énergie électrique consiste à maintenir en permanence l'équilibre entre l'énergie électrique produite et qui est injectée dans le réseau, d'une part, et l'énergie électrique consommée à chaque instant par l'ensemble des abonnés au service de distribution de cette énergie. Tout déséquilibre entre production et consommation globale d'énergie électrique se traduit par une déviation de la fréquence du réseau par rapport à la fréquence nominale précitée. La fréquence du réseau évolue à chaque instant, avec une déviation comprise entre quelques milli-hertz et quelques centaines de milli-hertz. Par exemple, une déviation de fréquence du réseau de 0,2 Hz correspond à un déséquilibre de 3 gigawatts (GW) entre l'énergie électrique injectée dans le réseau par l'ensemble des unités de production d'énergie l'alimentant et l'énergie électrique consommée par l'ensemble des équipements consommateurs électriques qui lui sont raccordés par les abonnés pour utiliser l'énergie électrique distribuée.

Pour assurer automatiquement la stabilité du réseau, il existe plusieurs mécanismes, généralement normalisés, qui permettent à tout instant le maintien de l'équilibre entre la consommation et la production d'énergie électrique. Ces mécanismes permettent de stabiliser les caractéristiques électriques du réseau au niveau local, national, ou à plus large échelle.

Par exemple, il existe en Europe un mécanisme appelé "réglage primaire de fréquence" ou FCR (de l'anglais « Frequency Containment Reserve »), qui permet de moduler la puissance individuellement produite par chacun des groupes de production électrique alimentant le réseau, en fonction de la déviation de la fréquence du réseau électrique reflétant un déséquilibre entre production et consommation globales. De nombreuses solutions spécifiques sont par ailleurs implémentées par les producteurs d'énergie électrique au niveau des unités de production d'énergie électrique, qui visent à contribuer au réglage primaire de fréquence en répondant plus ou moins rapidement aux variations de sollicitation du réseau par les consommateurs. L'implémentation de ces solutions au niveau de chaque unité de production procure des réserves de stabilisation de la fréquence qui réagissent automatiquement pour compenser les déviations de fréquence et stabiliser la fréquence du réseau à une valeur la plus proche possible de sa fréquence nominale. La principale exigence technique pour une telle implémentation est une réaction automatique et proportionnelle aux écarts de fréquence du réseau dans un délai le plus bref possible, de quelques secondes au maximum.

Dans l'art existant divulgué par la demande de brevet européen EP2139090A1, il est proposé d'assurer le service FCR avec un système de stockage à batteries. Il est divulgué une méthodologie basée sur la prédiction des variations de fréquence du réseau afin d'optimiser dynamiquement les bornes d'état de charge min et max des batteries. En effet, lorsque l'état de charge d'une batterie passe sous le seuil min, la recharge de la batterie depuis le réseau est nécessaire et inversement pour la borne max. Le but est de diminuer les périodes de recharge qui sont couteuses. Le succès de cette méthode repose sur la prédiction des évènements sur le réseau et est basée sur un enregistrement des évènements passés. Les auteurs justifient leur invention en argumentant que les périodes comme le matin et en début de soirée correspondent aux moments où la fréquence du réseau est généralement sous sa valeur nominale, et sont donc plus facilement prédictibles. Un inconvénient de cette solution est d'avoir à établir des prédictions robustes sur un horizon de temps lointain. Or il n'est pas proposé dans ce document de moyens techniques pour y arriver. De plus, avec l'augmentation de la part des énergies renouvelables dans le mixe énergétique, ces événements de fluctuation du réseau deviennent difficiles à anticiper compte tenu des aspects météorologiques locaux aux centrales de production d'énergie électrique d'origine solaire ou éolienne.

Par ailleurs, les réseaux électriques évoluent vers une hybridation des centrales de production d'énergie électrique traditionnelles avec des systèmes de stockage de l'énergie (batteries, volants d'inertie, etc.). Cette hybridation permet d'améliorer les performances globales d'un groupe de production. En effet, par rapport à une unité de production d'énergie électrique qui présente un temps de réponse relativement long (au regard des temps de réponse attendus pour assurer le réglage primaire de fréquence) à une variation de consigne de la puissance produite, une unité de stockage d'énergie possède généralement un temps de réponse relativement rapide (là-aussi au regard des temps de réponse attendus pour les besoins du service FCR) à une variation de consigne de la puissance stockée ou restituée. Moyennant quoi, un pilotage approprié de ces deux unités par un contrôleur d'hybridation permet d'assurer avec plus d'efficacité la gestion du groupe de production d'énergie électrique et sa contribution individuelle au réglage primaire de la fréquence du réseau. Notamment, l'hybridation d'une unité de production avec une unité de stockage permet d'améliorer les performances globales du groupe ainsi constitué, tout en diminuant les sollicitations sur ce groupe hybridé ce qui, in fine, contribue à réduire ses besoins de maintenance.

La demande internationale de brevet WO2012177633A2 correspondant au brevet européen EP2721710, divulgue ainsi un groupe de production électrique comportant une centrale de production électrique hybridée avec un système de stockage d'énergie à batteries dont la fonction est d'assister la centrale de production électrique dans le maintien de la fréquence nominale du réseau électrique. Pour ce faire il est décrit qu'un signal de régulation représentatif de la déviation de fréquence du réseau est filtré afin d'appliquer la composante haute fréquence au système de stockage d'énergie alors que la composante basse fréquence est appliquée au groupe de production d'énergie électrique. Toutefois, seul ce principe générique est présenté, et il n'est pas proposé de description technique de solutions à mettre en œuvre concrètement.

Le principe du filtrage d'un signal de régulation représentatif de la déviation de fréquence du réseau est également décrit dans l'article scientifique par C. Jin, N. Lu, S. Lu, Y. Makarov and R. A. Dougal, "Coordinated control algorithm for hybrid energy storage systems", 2011 IEEE Power and Energy Society General Meeting, Detroit, MI, USA, 2011, pp. 1-7. Selon l'enseignement de ce document, une centrale hydroélectrique est hybridée avec un volant d'inertie, et le principe de la gestion de ce groupe basé sur un filtrage d'un signal de régulation représentatif de la déviation de fréquence du réseau est décrit, en précisant des modalités de gestion de l'inertie et de pilotage du volant d'inertie qui sont basées sur des bornes min et max de fonctionnement. Lorsque le volant d'inertie est déchargé et que son état de charge ou SOC (de l'anglais « *State of Charge* ») atteint sa borne min, il est rechargé en utilisant l'énergie hydraulique jusqu'à retour à son point de rechargement.

L'article scientifique par Ritu Raj Shrivastwa, Ahmad Hably, Seddik Bacha, Hugo Mesnage, Renaud Guillaume, "An overview of Hybridization of Power sources for Ancillary Service", ICIT 2020 - IEEE International Conference on Industrial Technology, Feb 2020, Buenos Aires, Argentina, divulgue également un enseignement en rapport avec un filtrage d'un signal de régulation représentatif de la déviation de fréquence du réseau pour piloter le fonctionnement de plusieurs sources d'énergie.

Enfin, les demande de brevet FR3131473 et FR3131474, du même demandeur que la présente demande, enseignent également des solutions de gestion de l'hybridation d'une centrale de production avec une unité de stockage d'énergie électrique qui sont basées sur le filtrage d'un signal de régulation représentatif de la déviation de fréquence du réseau. Ces solutions procurent de bons résultats, mais la poursuite des efforts de recherche et développement dans ce domaine permet de proposer une alternative, qui ne soit pas basée sur le principe du filtrage d'un signal de régulation représentatif de la déviation de fréquence du réseau pour piloter l'unité de production d'énergie électrique et l'unité de stockage d'énergie. En outre, les documents CN113572176 et US2017045902A1 divulguent l'utilisation de la logique floue pour la commande du stockage d'énergie dans une installation de production hybride (i.e., assurant la génération et le stockage/déstockage d'énergie électrique), dans le contexte de mécanismes de réglage primaire de fréquence d'un réseau de production et de distribution d'énergie électrique. Pour finir, le document WO2023111166A1 divulgue que dans les petits réseaux électriques ou micro-réseaux (appelés « *microgrids* » en anglais), on peut améliorer la continuité de la fourniture d'électricité à des équipements consommateurs de puissance électrique en contrôlant les réserves d'énergie (par exemple le stockage électrochimique) et l'écrêtement de la production par des sources d'énergie renouvelables et/ou intermittentes (comme par exemple une éolienne ou un panneau photovoltaïque).

**Exposé de l'invention**

L'invention a ainsi pour premier objet un procédé de commande d'une puissance fournie à un réseau de distribution d'énergie électrique (3) sous une tension alternative de fréquence nominale déterminée, par un groupe de production d'énergie électrique comportant :

- une unité de production d'énergie électrique pilotable par un contrôleur de régulation de l'énergie produite, ayant un temps de réponse relativement long à une variation de consigne de la puissance produite;

- une unité de stockage d'énergie pilotable, ayant un temps de réponse relativement court à une variation de consigne de la puissance stockée ou restituée, et utilisée pour le réglage primaire de la fréquence (FCR : « *Frequency Containment Reserve »)* de la tension alternative ; et,

- un contrôleur d'hybridation configuré pour assurer la gestion du groupe de production électrique et sa contribution au réglage primaire de la fréquence de la tension alternative en fonction d'un signal représentatif d'une déviation de ladite fréquence par rapport à la fréquence nominale, en pilotant la puissance stockée ou restituée par l'unité de stockage d'énergie à partir de la différence entre la puissance de réglage primaire de fréquence attendue du groupe de production au titre de sa contribution au réglage primaire de fréquence du réseau électrique et de la puissance produite à ce titre par l'unité de production d'énergie électrique,

ledit procédé comportant les étapes suivantes, mises en œuvre dans le contrôleur d'hybridation :

- acquisition d'un premier signal d'entrée qui est représentatif de l'état de charge de l'unité de stockage d'énergie ;

- acquisition d'un deuxième signal d'entrée qui est représentatif de la puissance stockée ou restituée par l'unité de stockage d'énergie ;

- acquisition d'un troisième signal d'entrée qui est représentatif de la dérivée temporelle de la puissance produite par l'unité de production d'énergie électrique au titre de sa contribution au réglage primaire de fréquence du réseau électrique ;

- production d'un signal de la consigne de la puissance produite par l'unité de production d'énergie électrique au titre de sa contribution au réglage primaire de fréquence du réseau électrique, ledit signal de consigne étant produit à l'aide d'au moins un processeur à inférences à au moins trois entrées, en fonction du premier signal d'entrée, du deuxième signal d'entrée, et du troisième signal d'entrée.

Comme la personne du métier l'aura compris, l'invention ne s'inscrit pas dans le cadre des solutions connues, exposées en introduction ci-dessus, qui sont basées sur un filtrage d'un signal de régulation représentatif de la déviation de fréquence du réseau et qui consistent à utiliser la composante haute fréquence de ce signal pour piloter l'unité de stockage d'énergie alors que sa composante basse fréquence est utilisée pour piloter le groupe de production d'énergie électrique.

L'état de charge (SOC) de l'unité de stockage d'énergie est prise en compte, ce qui permet de surveiller s'il s'éloigne trop de son point de fonctionnement optimal, autour de 50%. Le cas échéant, l'unité de production d'énergie électrique est mise à contribution pour augmenter ou diminuer sa puissance, respectivement lorsque le SOC est bas et lorsqu'il est haut, et ainsi rétablir un niveau de charge optimum de l'unité de stockage d'énergie.

La consigne de puissance de l'unité de stockage d'énergie est surveillée et l'unité de production d'énergie électrique est mise à contribution pour augmenter ou diminuer sa puissance produite lorsque la puissance sature en décharge et lorsque la puissance sature en charge. En effet, des contraintes technico-économiques peuvent conduire à sous-dimensionner la partie puissance de l'unité de stockage d'énergie au regard de la puissance attendue pour le service de réglage primaire de fréquence du réseau électrique (FCR). Par conséquent, la puissance délivrée ou absorbée par l'unité de stockage d'énergie peut parfois atteindre son point maximum de fonctionnement et ainsi être saturée. Dans ces situations l'unité de production d'énergie électrique est sollicitée pour soulager l'unité de stockage d'énergie afin qu'elle revienne dans une zone de puissance acceptable. Un compromis peut ainsi être réalisé entre le fait d'admettre l'occurrence de telles situations dans lesquelles il convient d'adapter la puissance produite par l'unité de production, d'une part, et la puissance électrique maximum de stockage ou de déstockage d'énergie installée, correspondant à une capacité de puissance des batteries, d'autre part. Des études ont montré qu'avec une capacité de puissance du stockage couvrant une portion comprise entre 15% et 20% seulement de la variation de puissance max pour les besoins du service FCR (tels que contractualisés avec l'exploitant du réseau), on couvre 99% des cas de déviation de fréquence qui surviennent sur une année en ce sens que l'unité de stockage est capable de fournir la puissance demandée. Il n'est donc pas rentable, d'un point de vue économique, d'avoir des batteries dont la puissance couvrirait la totalité de la variation de puissance attendue pour la satisfaction des besoins du service FCR pour le respect, par elles seules, des engagements contractuels à cet égard. Avec l'invention, on réalise un gain économique à l'achat des batteries car on économise entre 80% et 85% d'achat de puissance de batteries installée. L'invention permet en effet de gérer les situations marginales, lesquelles peuvent se limiter à quelques occurrences par an seulement, dans lesquelles le système de stockage s'avère sous-dimensionné en puissance, car on surveille la puissance délivrée par le système de stockage et on adapte la puissance de l'unité de production pour venir suppléer le système de stockage lorsque nécessaire.

Le fait de prendre en compte la dérivée temporelle de la puissance produite par l'unité de production d'énergie électrique permet de connaitre la vitesse de variation de l'énergie ainsi produite. Cela permet d'anticiper l'augmentation ou la réduction de la puissance produite par l'unité de production en fonction de l'inertie de l'installation, et ainsi de répondre le plus rapidement possible aux variations de fréquence du réseau sans rendre le groupe de production instable. En effet grâce à la prise en compte de cette dérivée temporelle en entrée du contrôleur d'hybridation, par exemple, ledit contrôleur ne demandera pas l'augmentation de la puissance produite alors que cette dernière est déjà en train d'augmenter. Cela afin d'éviter d'accélérer la production alors que l'on arrive au point de production optimum et qu'une variation de la consigne de production amènerait à dépasser ce point de fonctionnement. En effet, le contrôleur d'hybridation demanderait ensuite à diminuer la puissance produite pour se rapprocher du point de fonctionnement optimum, et cela conduirait à des dépassements importants voir des oscillations de la puissance produite par le groupe hydroélectrique. Ces phénomènes d'oscillations sont à éviter car ils causent un vieillissement plus rapide des organes électromécaniques, du fait de leurs sollicitations à répétition. Tous ces inconvénients sont adressés par la mise en œuvre du procédé, et leurs conséquences sont substantiellement diminuées grâce à cette mise en œuvre.

Les modes de réalisation de l'invention proposent une stratégie de recharge simple et robuste, notamment car son principe n'est pas de piloter la recharge d'un volant d'inertie directement à partir de l'énergie hydraulique (énergie non électrique) d'une centrale hydraulique ni de recharger des batteries à partir de la puissance disponible sur le réseau de distribution de l'énergie électrique, mais permet d'utiliser l'unité de production d'énergie électrique pour cela. L'opération est donc transparente, vue depuis le réseau électrique.

L'hybridation selon les modes de réalisation de l'invention permet de diminuer les déplacements cumulés des actionneurs de l'unité de production d'énergie électrique. En l'occurrence ce contrôleur a été utilisé sur un système de turbine hydroélectrique et a montré une diminution de ses déplacements cumulés de plus de 80% par rapport à une installation non hybridée. Elle permet aussi de diminuer de 96% les changements de direction des systèmes mécaniques correspondants. Ceci permet de diminuer significativement l'utilisation et donc l'usure des pièces mécaniques du groupe de production hydroélectrique. Les modes de réalisation de l'invention permettent en outre d'améliorer d'un facteur de 10 les performances de la contribution du groupe de production électrique au réglage primaire de fréquence (FCR) du réseau électrique auquel ledit groupe de production électrique est raccordé.

Certains aspects préférés mais non limitatifs du procédé sont les suivants.

Dans des modes de mise en œuvre du procédé, le processeur à inférences peut mettre en œuvre :

- trois modules de fuzzification utilisant trois groupes de fonctions d'appartenance pour associer des valeurs d'entrée floues à des valeurs numériques normalisées du premier signal d'entrée, du deuxième signal d'entrée et du troisième signal d'entrée, respectivement,

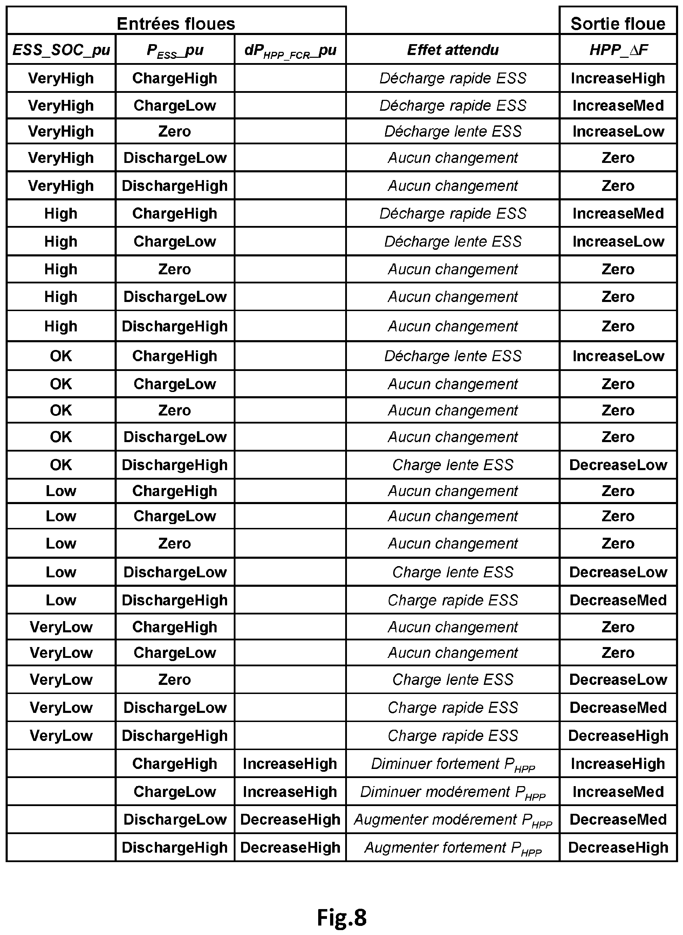

- un moteur d'inférence, mettant en œuvre des règles d'inférence (Fig.8) liant des triplets de valeurs d'entrée floues du premier signal d'entrée, du deuxième signal d'entrée et du troisième signal d'entrée, respectivement, à des valeurs de sortie floues respectives,

- un module de défuzzification utilisant des fonctions d'appartenance pour associer les valeurs de sortie floues à des valeurs numériques de sortie respectives.

Le signal de la consigne de la puissance produite par l'unité de production électrique au titre de sa contribution au réglage primaire de fréquence du réseau électrique peut être obtenu par intégration en fonction du temps de valeurs numériques de sortie du processeur à inférences.

La puissance produite par l'unité de production d'énergie électrique au titre de sa contribution au réglage primaire de fréquence du réseau électrique peut être déterminée sur la base d'un modèle simplifié du comportement de ladite unité de production en fonction du signal de consigne de la puissance produite par l'unité de production d'énergie électrique au titre de sa contribution au réglage primaire de fréquence du réseau électrique qui est appliqué à ladite unité de production.

Le troisième signal d'entrée qui est représentatif de la dérivée temporelle de la puissance produite par l'unité de production d'énergie électrique, peut être obtenu par calcul à partir du modèle simplifié.

Le signal de consigne de la puissance produite par l'unité de production d'énergie électrique au titre de sa contribution au réglage primaire de fréquence du réseau électrique peut avantageusement être de même nature que le signal représentatif d'une déviation de la fréquence du réseau électrique par rapport à la fréquence nominale dudit réseau, de manière à pouvoir lui être substituable en entrée d'un contrôleur de régulation de la puissance produite par ladite unité de production.

L'un ou l'autre du signal représentatif d'une déviation de la fréquence du réseau électrique par rapport à la fréquence nominale et du signal de consigne de la puissance produite par l'unité de production d'énergie électrique au titre de sa contribution au réglage primaire de fréquence du réseau électrique peut être sélectivement reçu en entrée du contrôleur de régulation de la puissance produite par l'unité de production d'énergie électrique.

L'invention a aussi pour deuxième objet un dispositif de commande d'une puissance fournie à un réseau de distribution d'énergie électrique sous une tension alternative de fréquence nominale déterminée, par un groupe de production d'énergie électrique comportant :

- une unité de production d'énergie électrique pilotable, ayant un temps de réponse relativement long à une variation de consigne de la puissance produite ;

- une unité de stockage d'énergie pilotable, ayant un temps de réponse relativement court à une variation de consigne de la puissance stockée ou restituée, et utilisée pour le réglage primaire de la fréquence (FCR : « *Frequency Containment Reserve* ») de la tension alternative ; et,

ledit dispositif comportant :

- un contrôleur de régulation de l'énergie produite par l'unité de production d'énergie électrique ; et,

- un contrôleur d'hybridation configuré pour assurer la gestion du groupe de production électrique et sa contribution au réglage primaire de la fréquence de la tension alternative en fonction d'un signal représentatif d'une déviation de ladite fréquence par rapport à la fréquence nominale, en pilotant la puissance stockée ou restituée par l'unité de stockage d'énergie à partir de la différence entre la puissance de réglage primaire de fréquence attendue du groupe de production au titre de sa contribution au réglage primaire de fréquence du réseau électrique et de la puissance produite à ce titre par l'unité de production d'énergie électrique, ledit contrôleur d'hybridation comprenant au moins un processeur à inférences à au moins trois entrées et étant configuré pour :

  • recevoir en entrée un premier signal d'entrée qui est représentatif de l'état de charge de l'unité de stockage d'énergie ;

  • recevoir en entrée un deuxième signal d'entrée qui est représentatif de la puissance stockée ou restituée par l'unité de stockage d'énergie ;

  • recevoir en entrée un troisième signal d'entrée qui est représentatif de la dérivée temporelle de la puissance produite par l'unité de production d'énergie électrique au titre de sa contribution au réglage primaire de fréquence du réseau électrique ;

  • produire en sortie un signal de consigne de la puissance produite par l'unité de production d'énergie électrique au titre de sa contribution au réglage primaire de fréquence du réseau électrique, ledit signal de variation de consigne étant produit à l'aide du processeur à inférences ayant au moins trois entrées, en fonction du premier signal d'entrée, du deuxième signal d'entrée et du troisième signal d'entrée, respectivement.

Dans des modes de réalisation du dispositif, le processeur à inférences peut comprendre :

- trois modules de fuzzification utilisant trois groupes de fonctions d'appartenance pour associer des valeurs d'entrée floues à des valeurs numériques normalisées du premier signal d'entrée, du deuxième signal d'entrée et du troisième signal d'entrée, respectivement ;

- un moteur d'inférence, mettant en œuvre des règles d'inférence liant des triplets de valeurs d'entrée floues du premier signal d'entrée, du deuxième signal d'entrée et du troisième signal d'entrée, respectivement, à des valeurs de sortie floues respectives ; et,

- un module de défuzzification utilisant des fonctions d'appartenance pour associer les valeurs de sortie floues à des valeurs numériques de sortie respectives.

Le contrôleur d'hybridation peut comprendre un intégrateur peut être configuré pour produire le signal de la consigne de la puissance produite par l'unité de production électrique au titre de sa contribution au réglage primaire de fréquence du réseau électrique, par intégration en fonction du temps de valeurs numériques de sortie du processeur à inférences.

La puissance produite par l'unité de production d'énergie électrique au titre de sa contribution au réglage primaire de fréquence du réseau électrique peut être déterminée sur la base d'un modèle simplifié du comportement de ladite unité de production en fonction du signal de consigne de la puissance produite par l'unité de production d'énergie électrique au titre de sa contribution au réglage primaire de fréquence du réseau électrique qui est appliqué à ladite unité de production.

Le troisième signal d'entrée qui est représentatif de la dérivée temporelle de la puissance produite par l'unité de production d'énergie électrique, peut être obtenu par calcul à partir du modèle simplifié.

Le signal de consigne de la puissance produite par l'unité de production d'énergie électrique au titre de sa contribution au réglage primaire de fréquence du réseau électrique peut être avantageusement de même nature que le signal représentatif d'une déviation de la fréquence du réseau électrique par rapport à la fréquence nominale dudit réseau, de manière à pouvoir lui être substituable en entrée d'un contrôleur de régulation de la puissance produite par ladite unité de production.

Dans des modes de réalisation le dispositif peut comprendre en outre un sélecteur configuré pour fournir l'un ou l'autre du signal représentatif d'une déviation de la fréquence du réseau électrique par rapport à la fréquence nominale et du signal de consigne de la puissance produite par l'unité de production d'énergie électrique au titre de sa contribution au réglage primaire de fréquence du réseau électrique, en entrée du contrôleur de régulation de la puissance produite par l'unité de production d'énergie électrique.

Un troisième et dernier objet de l'invention est un groupe de production d'énergie électrique adapté pour fournir ladite énergie électrique produite à un réseau de distribution d'énergie électrique sous une tension alternative de fréquence nominale déterminée, ledit groupe comportant :

- une unité de production d'énergie électrique pilotable, ayant un temps de réponse relativement long à une variation de consigne de la puissance produite ;

- une unité de stockage d'énergie pilotable, ayant un temps de réponse relativement court à une variation de consigne de la puissance stockée ou restituée (PESS), et utilisée pour le réglage primaire de la fréquence (FCR : « *Frequency Containment Reserve* ») de la tension alternative ; ainsi que,

- un dispositif de commande de la puissance fournie au réseau de distribution d'énergie électrique selon le deuxième objet ci-dessus.

**Brève description des dessins**

D'autres aspects, buts, avantages et caractéristiques de l'invention apparaîtront mieux à la lecture de la description détaillée suivante de formes de réalisation préférées de celle-ci. Cette description est donnée à titre d'exemple non limitatif. Elle est faite en référence aux dessins annexés, sur lesquels :

[Fig. 1] est une représentation schématique d'une unité de production électrique non-hybridé raccordé à un réseau de distribution d'énergie électrique, selon l'art existant ;
[Fig. 2] est une représentation schématique d'un groupe de production électrique hybridé, également connu dans l'état de la technique ;
[Fig. 3] est une représentation schématique d'un groupe de production électrique hybridé, selon des modes de réalisation de l'invention ;
[Fig. 4] est un schéma fonctionnel d'un contrôleur d'hybridation selon des modes de réalisation de l'invention ;
[Fig. 5] est un graphe illustrant les fonctions d'appartenance utilisées dans des modes de réalisation, pour convertir en variables floues des valeurs scalaires représentatives de l'état de charge de l'unité de stockage d'énergie ;
[Fig. 6] est un graphe illustrant les fonctions d'appartenance utilisées dans des modes de réalisation, pour convertir en variables floues des valeurs scalaires représentatives de la puissance fournie (positive) ou absorbée (négative) par l'unité de stockage d'énergie ;
[Fig. 7] est un graphe illustrant les fonctions d'appartenance utilisées dans des modes de réalisation, pour convertir en variables floues des valeurs scalaires représentatives de la dérivée de la puissance produite par l'unité de production d'énergie électrique en lien avec la déviation de fréquence du réseau dans le cadre du réglage primaire de fréquence (FCR) ;
[Fig. 8] est tableau illustrant des règles d'inférence mises en œuvre dans un processeur flou selon des mises en œuvre de l'invention ; et,
[Fig. 9] est un graphe illustrant les fonctions d'appartenance utilisées dans des modes de réalisation, pour convertir en valeurs scalaires des variables floues représentatives de la variation (en fréquence) de la consigne de puissance électrique à produire par l'unité de production d'énergie électrique en lien avec la déviation de fréquence du réseau dans le cadre du réglage primaire de fréquence (FCR).

**Description détaillée de modes de réalisation**

Sur les figures et dans la suite de la description, les mêmes références numériques désignent des éléments identiques ou similaires. De plus, les différents éléments ne sont pas représentés à l'échelle, de manière à privilégier la clarté des figures. Par ailleurs, les différents modes de réalisation et les variantes qui sont présentés ne sont pas exclusifs les-uns-des-autres et peuvent être combinés entre eux.

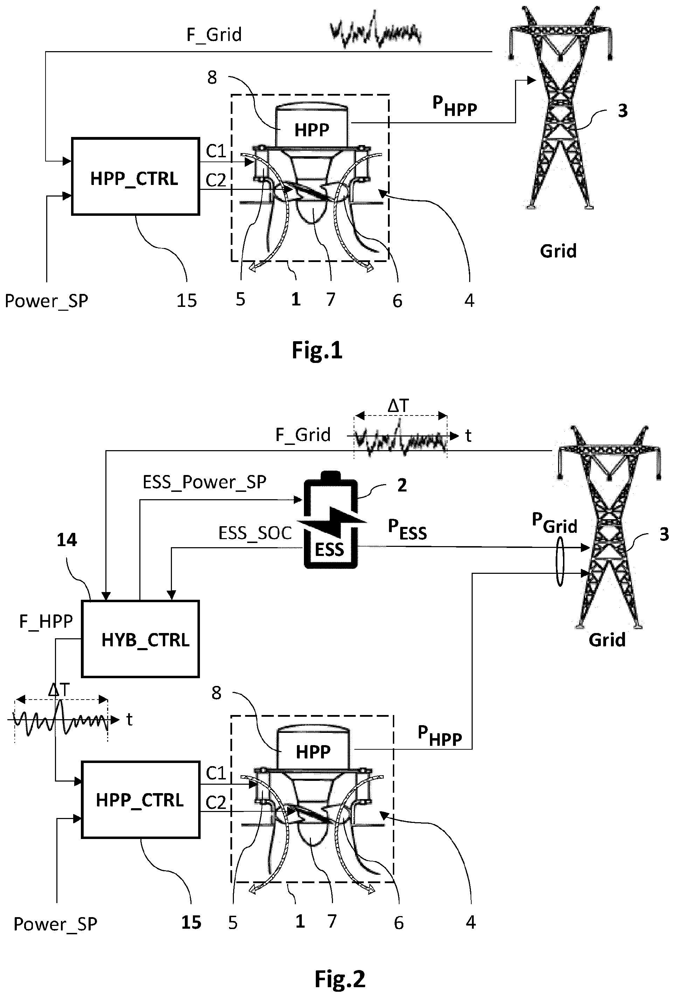

Sur le schéma de la figure 1, une unité de production d'énergie électrique 1 non-hybridée conventionnelle, qui est par exemple une centrale hydroélectrique, est ici représentée symboliquement par une turbine hydraulique 4. Sur la figure, le flux d'eau passant à travers la turbine 4 est représenté symboliquement par deux flèches courbes symétriques par rapport à l'axe centrale de la turbine (axe vertical dans l'exemple représenté). La turbine 4 comprend des vannes d'arrivée d'eau 5, dont le degré d'ouverture est pilotable par des actionneurs (non représentés), entre une position complètement fermée et une position complètement ouverte, pour laisser passer dans la turbine une quantité d'eau variable en fonction d'une consigne C1 de réglage des vannes. La turbine 4 comprend en outre un rotor inducteur 7 avec des pales 6, qui est entraîné en rotation par l'action de l'eau en mouvement contre lesdites pales. En tournant, le rotor 7 entraîne la rotation d'une génératrice électrique 8 comprenant un induit statorique, et donc la production d'un courant électrique dans cet induit. L'inclinaison des pales 5 est pilotable par des actionneurs (non représentés), suivant un angle déterminé par une consigne C2, pour faire varier le pas de la turbine, lequel détermine la réaction des pales au flux d'eau circulant dans la turbine. Ceci permet, en combinaison avec le degré d'ouverture des vannes 5, d'adapter la vitesse de rotation du rotor afin d'obtenir des conditions de fonctionnement optimales de la turbine 4.

La génératrice 8 de l'unité de production 1 génère une puissance électrique notée $P_{HPP}$ à la figure 1, qui est fournie au réseau de transport et/ou de distribution d'énergie électrique 3, lequel est représenté symboliquement par un pylône haute tension sur la figure 1. Dans ce qui suit, et par raccourci, les termes « réseau électrique » ou « réseau » sont parfois utilisés pour désigner le réseau 3.

Dans le réseau 3, l'énergie électrique est transportée sous la forme d'une tension électrique alternative, ayant une fréquence nominale Fo. Par exemple, Fo est égale à 50 Hertz (Hz) en Europe, ou à 60 Hz aux Etats-Unis. La valeur de la tension électrique (exprimée en volts, V, ou en kilovolts, kV)) dépend de la nature des lignes du réseau considéré. En Europe, les lignes très haute tension (HTB2) et les lignes haute tension (HTB) du réseau de transport conduisent le courant sous des tensions généralement de 400 kV ou 225 kV, et sous des tensions de 63 ou 90 kV, respectivement. Dans le réseau de distribution, le courant circule sous des tensions comprises entre 15 kV et 30 kV sur les lignes moyenne tension (HTA) qui alimentent les petites industries à l'échelle locale, et sous une tension de 230 V ou 400 V pour les lignes basse tension (BT) qui alimentent les foyers et les artisans. Un maillage de postes de transformation électrique répartis sur le territoire permet la conversion de la tension pour l'adapter aux différentes portions du réseau, entre le lieu de la production et celui de la consommation de l'énergie électrique.

Toutes les unités de production d'énergie électrique de forte puissance, qu'elles soient des centrales dites "thermiques" (alimentées au charbon, au pétrole, au gaz, etc.) ou des centrales hydrauliques comme l'unité de production 1 considérée dans l'exemple, doivent contractuellement participer, conjointement entre elles, au mécanisme de réglage primaire de fréquence (FCR) du réseau. L'unité de production électrique 1 est donc dimensionnée et pilotée par un contrôleur 15 de régulation de la puissance produite par la centrale (bloc noté "HPP-CTRL" à la figure 1), non seulement pour produire et délivrer dans le réseau 3 la puissance électrique $P_{HPP}$ à une valeur de base convenue, en fonction d'une consigne Power_SP négociée entre les exploitants respectifs de l'unité de production 1 et du réseau 3, mais également pour la faire varier plus ou moins légèrement par rapport à sa valeur de base selon les besoins du réglage primaire de fréquence (FCR) dudit réseau. Un délai de réaction attendu, qui peut être paramétrable en fonction des centrales et en fonction de données opérationnelles propres à chaque centrale, est par exemple de l'ordre de 30 s pour le réseau électrique national en France.

A cet effet, et sous la commande du contrôleur de régulation 15 qui est piloté par un signal F_Grid représentatif de la fréquence du réseau électrique 3, l'unité de production 1 non-hybridée de la figure 1 ajuste, à la hausse ou à la baisse, la puissance $P_{HPP}$ qui est produite et injectée dans le réseau 3 en fonction de la différence entre F_Grid et la valeur nominale connue de fréquence du réseau Fo. En ce sens, F_Grid est également représentatif de la déviation de fréquence du réseau 3. Ceci intervient dès lors qu'apparaît une déviation de la fréquence du réseau par rapport à Fo, laquelle traduit intrinsèquement un déséquilibre entre énergie produite et énergie consommée à l'échelle du réseau électrique dans son ensemble. Bien entendu, les autres unités de production comparables à l'unité 1 qui sont aussi raccordées au réseau électrique, sont pilotées pour faire de même simultanément. Chacune apporte ainsi une contribution à la régulation de fréquence du réseau.

En pratique, le contrôleur de régulation 15 de la centrale 1 montrée à la figure 1 est configuré pour adapter en permanence les consignes C1 et C2 de l'ouverture des vannes 5 et de l'orientation des pales 6, respectivement, de la turbine 4 en fonction de la consigne de puissance Power_SP et du signal F_Grid représentatif de la déviation de fréquence du réseau 3. Le contrôleur de régulation de puissance 15 d'une centrale hydraulique conventionnelle (non-hybridée) comme représentée à la figure 1 est conçu et fonctionne, de manière classique, sur le principe d'un régulateur PID (mis pour "Proportionnel-Intégral-Différentiel"), en réalisant un asservissement des consignes C1 et C2 en fonction de la consigne de puissance Power_SP et du signal F_Grid.

Les consignes C1 et C2 pilotent des servomoteurs de la turbine 4 (non représentés) qui commandent le degré d'ouverture des vannes 5 et l'inclinaison des pales 6 de la turbine 4 afin d'adapter la production de la centrale 1 en puissance électrique. On appréciera que des changements de consigne peuvent intervenir de manière répétée, suivant les variations de faibles amplitudes de la fréquence du réseau qui exigent une réponse de la centrale, à chaque fois avec un temps de réponse relativement faible. Or, l'actionnement de ces organes de contrôle engendre une usure et un vieillissement des pièces électromécaniques concernées, qui appelle une maintenance d'autant plus importante et / ou des remplacements de pièces d'autant plus rapprochés de ces organes que leurs sollicitations dues à la contribution de l'unité de production 1 à la régulation de fréquence du réseau sont fréquentes.

Le concept d'hybridation d'une unité de production d'énergie électrique avec une unité de stockage d'énergie installée localement, a été proposé afin de pallier cet inconvénient.

En référence au schéma de la figure 2 un groupe de production électrique hybride connu, comme divulgué dans les documents FR3131473 et FR3131474 cités en introduction, comprend par exemple la centrale de production électrique 1 de la figure 1 hybridée avec une unité de stockage d'énergie électrique 2.

Dans un exemple, l'unité de stockage d'énergie électrique 2 est constituée de batteries, aptes à stocker l'énergie sous forme électrochimique, comme par exemple des batteries lithium-ion. L'unité de stockage 2 est couplée au réseau électrique 3. Elle est adaptée pour délivrer ou consommer, sur consigne, une puissance électrique déterminée sur ledit réseau, dans le cadre du mécanisme de régulation de fréquence (FCR) pour ledit réseau.

Le groupe de production électrique hybride de la figure 2 comprend toujours un contrôleur de régulation d'énergie 15, identique à celui du groupe de production de la figure 1. Il comprend en outre un contrôleur d'hybridation 14 (bloc noté "HYB-CTRL" à la figure 2), qui est intercalé entre le réseau électrique 3 et le contrôleur de régulation d'énergie 15. Ce contrôleur d'hybridation 14 reçoit en entrée le signal F_Grid de déviation de fréquence du réseau 3, ainsi qu'un signal ESS_SOC représentatif de l'état de charge ou SOC (de l'anglais « State-of-Charge ») de l'unité de stockage d'énergie 2. En réponse à ces deux signaux en entrée, il délivre en sortie un signal de consigne ESS_Power_SP, adapté pour piloter l'énergie stockée ou restituée par l'unité de stockage 2. Il délivre également en sortie un signal F_HPP de pilotage de l'unité de production d'énergie électrique 1, en substitution du signal de déviation de fréquence F_Grid et qui est de même nature que ce dernier. Par les termes "de même nature" on entend que le signal de pilotage F_HPP code l'information adaptée au pilotage de l'unité 1 de la même manière que le signal F_Grid : mêmes niveaux de tension, même schéma de modulation et/ou codage, même protocole de communication le cas échéant, etc. Ainsi, le signal de pilotage F_HPP peut être substitué au signal F_Grid afin de piloter l'unité de production 1 sans nécessiter de modification du contrôleur de régulation d'énergie 15.

Comme indiqué en introduction de la présente description, en effet, le signal F_HPP est dérivé du signal F_Grid par filtrage "passe-bas" de ce dernier, en ce sens que les composantes rapides (à hautes fréquences) de la variation de la fréquence du réseau autour de sa fréquence nominale Fo sont traitées dans le cadre du mécanisme FCR par la charge ou décharge de l'unité de stockage 2, alors que seules les composantes moins rapides (à basses fréquences) sont transmises au contrôleur de régulation de puissance 15 dans le signal F_HPP afin qu'une réponse leur soit apportée par l'unité de production 1. Le contrôleur de régulation de puissance 15 traite le signal F_HPP par la modification des consignes C1 et C2 de l'unité de production 1, sans aucun changement de son mode de fonctionnement habituel, mais sur la base d'un signal de pilotage de substitution, à savoir le signal F_HPP au lieu du signal F_Grid, qui ne représente que les déviations lentes de la fréquence du réseau. Sur le schéma de la figure 2, ce filtrage des hautes fréquences du signal F_Grid pour donner le signal de pilotage F_HPP à basses fréquences est figuré par l'allure de portions correspondantes de ces deux signaux en fonction du temps, sur un même intervalle de temps noté $\Delta T$. Comme on le voit, le signal F_HPP ne contient plus que les variations à basses fréquence du signal F_Grid. Ainsi, les modifications des consignes C1 et C2 de pilotage des servomoteurs de l'unité de production 1 pilotées par le signal F_HPP sont moins fréquentes que si elles étaient pilotées par le signal F-GRID directement. Le résultat obtenu est une économie des sollicitations de ces actionneurs et donc une moindre usure de l'ensemble des éléments électromécaniques associés aux vannes 5 et aux pales 6 de la turbine 4, dans l'exemple de la centrale hydraulique 1 montrée à la figure 2.

La personne du métier appréciera que le signal de substitution F_HPP pour le pilotage de la centrale 1 est adapté pour piloter, sous la commande du contrôleur de régulation 15 inchangé par rapport à celui de la figure 1, la puissance fournie par la seule centrale 1. La puissance fournie par la centrale 1, toujours notée $P_{HPP}$ à la figure 2, est intégralement injectée dans le réseau 3, au point de raccordement avec le réseau électrique 3. Cette puissance est donc fournie au réseau électrique et/ou au système de stockage 2 (notamment lorsque ce dernier est en charge). La personne du métier notera également que, l'unité de stockage d'énergie 2 est utilisée pour apporter ou consommer le complément de puissance à la puissance qui est attendue par le gestionnaire de réseau, notée ici $P_{Grid}$. Cette puissance complémentaire, notée $P_{ESS}$, est fournie au réseau électrique 3 en complément de la puissance fournie par l'unité de production 1 notée $P_{HPP}$ lorsque cette dernière n'est pas suffisante au regard de la puissance attendue par le gestionnaire de réseau. Inversement, cette puissance $P_{ESS}$ est consommée par l'unité de stockage 2 lorsque la puissance $P_{HPP}$ fournie par l'unité de production 1 est supérieure à la puissance $P_{GRID}$ attendue par le gestionnaire de réseau. Par conséquent la personne du métier notera que l'unité de stockage ne stocke pas d'énergie depuis le réseau électrique 3, mais qu'elle ne stocke de l'énergie qu'en provenance de l'unité de production 1 directement.

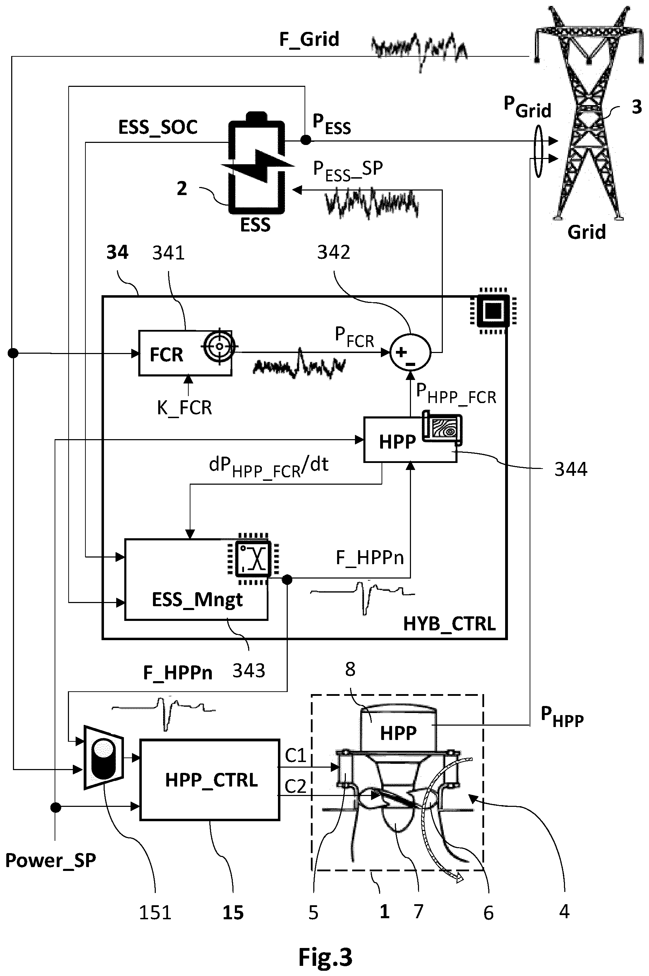

En référence maintenant au schéma de la figure 3, un groupe de production électrique hybride 1-2 selon des modes de réalisation de l'invention comprend une unité de production d'énergie électrique 1 et un contrôleur de régulation de puissance 15 comme ceux des figures 1 et 2, ainsi qu'une unité de stockage d'énergie électrique 2 comme celle de la figure 2.

Plus généralement, l'unité 1 peut être toute unité de production d'énergie électrique pilotable, comme par exemple une centrale hydroélectrique avec une ou plusieurs turbines telle que comme la turbine 4 représentée, par exemple des turbines de type KAPLAN, mais aussi une centrale solaire photovoltaïque comprenant une ferme de panneaux photovoltaïques, un parc éolien comprenant une batterie d'éoliennes, etc.

L'unité de stockage d'énergie électrique 2, quant à elle, peut comprendre tous moyens de stockage d'énergie aptes à stocker, de manière réversible, de l'énergie électrique sous forme mécanique, électrochimique, ou autre. Il peut s'agir, par exemple, d'un volant d'inertie, d'un ensemble de batteries électrochimiques comme un conteneur de batteries lithium-ion ou de supercondensateurs (ou *"supercap"* ou encore EDLC, mis pour « *Electrochemical Double Layer Capacitor* » en anglais car les supercondensateurs commercialisés sont réalisés selon le procédé double couche électrochimique), d'une ou plusieurs piles à combustible comme des piles à hydrogène, etc., ou une combinaison de tels moyens. On préfère des batteries, des supercondensateurs ou des volant d'inertie à des pile à combustible, car ces dernières sont relativement moins agiles, *i.e.,* elles ont un temps de réponse plus long à une modification de leur consigne de stockage d'énergie. La personne du métier appréciera que, dans tous les cas, l'unité de stockage d'énergie 2 a un temps de réponse plus court à une modification de ses consignes, que l'unité de production d'énergie électrique 1, ce qui est à la base du principe de l'hybridation. Ceci est en effet et de nature à satisfaire les attentes du gestionnaire du réseau électrique, pour l'efficacité de la régulation primaire de fréquence dudit réseau.

Quelle que soit sa technologie, éventuellement plurielle, l'unité de stockage d'énergie électrique 2 est couplée au réseau électrique 3 et est adaptée pour délivrer, sur consigne, une puissance électrique déterminée sur ledit réseau 3. Elle peut aussi consommer de l'énergie électrique sur le réseau électrique 3, dans le cadre de la mise en œuvre du mécanisme FCR pour la régulation de fréquence dudit réseau. Tout comme l'unité 2 du groupe de production d'énergie électrique hybride de la figure 2 qui fait partie de l'état de l'art, l'unité de stockage d'énergie électrique 2 de la figure 3 peut aussi être chargée, dans certains cas, par un surplus d'énergie électrique qui est produit par l'unité de production d'énergie électrique 1 du groupe de production auquel elle appartient. Son pilotage, toutefois, n'est plus basé ici sur le principe du filtrage du signal F_Grid représentatif de la dérive en fréquence du réseau électrique 3, comme cela était le cas dans l'art antérieur illustré par la figure 2. Cette différence apparaîtra plus clairement de la description de modes de réalisation de l'invention qui va suivre. Elle est à l'origine de l'amélioration procurée par ces modes de réalisation par rapport à un groupe de production d'énergie électrique hybride selon la figure 2, à savoir une plus grande limitation encore des variations de consigne de l'unité de production d'énergie électrique 1 par rapport à cet art antérieur. Cette amélioration s'apprécie du point de vue de la réduction des sollicitations des organes électromécaniques de l'unité de production 1, qui participent à la régulation de la puissance qu'elle produit, notamment pour les besoins du réglage primaire de fréquence (FCR) du réseau électrique 3.

En outre, et comme celui de la figure 2, le groupe de production électrique hybride de la figure 3 comprend un contrôleur d'hybridation 34 (bloc toujours noté "HYB-CTRL" à la figure 3), qui est intercalé entre le réseau électrique 3 et le contrôleur 15 de régulation de la puissance produite, de la même façon que l'était le contrôleur d'hybridation 14 de la figure 2. Comme ce dernier, le contrôleur d'hybridation 34 selon des modes de réalisation de l'invention est donc intercalé opérationnellement entre le réseau électrique 3 et le contrôleur de régulation de puissance 15, pour gérer le fonctionnement de l'hybridation du groupe de production 1-2, notamment pour ce qui concerne la contribution dudit groupe au réglage primaire de fréquence du réseau, qui est la raison d'être de cette hybridation. Dit autrement, le contrôleur d'hybridation 34 reçoit en entrée (notamment) le signal F_Grid représentatif de la déviation de fréquence du réseau électrique 3, ainsi que le signal ESS_SOC représentatif de l'état de charge (SOC) de l'unité de stockage d'énergie 2. Il reçoit en outre de l'unité de stockage d'énergie 2 un signal $P_{ESS}$ qui est représentatif de la puissance délivrée ou prélevée dans le réseau électrique 3 par ladite unité de stockage 2. On appréciera que les valeurs de ce signal sont des valeurs algébriques, c'est-à-dire qu'elles peuvent être positives (en cas de puissance délivrée dans le réseau 3) ou négatives (quand la puissance est prélevée sur le réseau 3). Le contrôleur d'hybridation 34 communique avec les autres équipements du groupe de production de façon numérique ou de façon analogique.

Ainsi, le signal F_Grid représentatif de la déviation de fréquence du réseau électrique 3, résulte d'une mesure avec précision (de l'ordre du milli-hertz, mHz) de la fréquence du système de tensions alternatives (typiquement 50 Hz ou 60 Hz, ou toute autre valeur de fréquence normalisée) sur le réseau électrique 3 auquel le groupe de production 1-2 est raccordé.

Le signal ESS_SOC représentatif du SOC de l'unité de stockage 2 et qui résulte d'une mesure du niveau de charge de ladite unité 2, peut par exemple être une valeur numérique exprimant un pourcentage, en l'occurrence le niveau relatif de l'état de charge électrique de l'unité 2 entre le niveau le plus bas (unité 2 totalement déchargée) et le niveau le plus haut (unité 2 totalement chargée). En plus de ce signal ESS_SOC, le contrôleur d'hybridation 34 peut également, dans des modes de réalisation non représentés, recevoir de l'unité de stockage d'énergie 2 d'autres mesures comme une mesure de puissance, ou des informations comme des alarmes, permettant le monitoring de ladite unité 2, avec éventuellement un affichage desdites informations destiné à un opérateur de surveillance.

Le signal $P_{ESS}$ résulte aussi d'une mesure de la puissance effectivement délivrée ou puisée dans le réseau électrique 3 par l'unité de stockage d'énergie 2. Cette mesure peut être transmise au contrôleur d'hybridation 34 sous la forme d'une valeur numérique. A cet effet, on peut se conformer, par exemple à un protocole de communication industriel de type Modbus, par exemple Modbus-RTU (mis pour « *Remote Terminal Unit* » en anglais). L'invention n'entend pas être limitée à cet exemple, tout autre type de codage numérique, ou analogique, pouvant aussi être employé selon les spécificités propres à chaque application.

En réponse à ces trois signaux reçus en entrée, à savoir F_Grid, ESS_SOC et $P_{ESS}$, le contrôleur d'hybridation 34 délivre en sortie un signal F_HPPn de pilotage de la puissance produite par l'unité de production d'énergie électrique 1 au titre de sa participation au mécanisme de réglage primaire de fréquence (FCR) du réseau électrique 3. Ce signal fait varier une ou plusieurs consignes de l'unité de production 1 comme les consignes C1 et C2 de la turbine 4 dans l'exemple représenté, afin que ladite unité 1 adapte la puissance nominale qu'elle produit sur la base de la consigne de puissance Power_SP, pour contribuer comme il se doit au mécanisme FCR. Le signal de consigne F_HPPn (ou signal de pilotage de la puissance produite par l'unité de production d'énergie électrique 1) peut être utilisé en substitution du signal de déviation de fréquence F_Grid, car il est de même nature que ce dernier. Par les termes "de même nature" on entend ici encore que le signal de pilotage F_HPPn (comme le signal F_HPP de la figure 2) code l'information adaptée au pilotage de l'unité de production d'énergie électrique 1 de la même manière que le signal F_Grid : mêmes niveaux de tension, même schéma de modulation et/ou codage, même protocole de communication le cas échéant, etc. Ainsi, le signal de pilotage F_HPPn peut être substitué au signal F_Grid afin de piloter l'unité de production 1 sans nécessiter de modification du contrôleur de régulation d'énergie 15. Il s'ensuit que le signal de pilotage F_HPPn permet de piloter l'unité de production hydroélectrique 1 par l'intermédiaire du même contrôleur de régulation de puissance 15 que celui des groupes de production d'énergie électrique de la figure 1 et de la figure 2, sans modification de celui-ci. Ceci n'est pas obligatoire, mais est un avantage appréciable dans la mesure où l'invention peut être déployée sans modification substantielle des éléments déjà installés de l'unité de production.

En pratique, le signal de pilotage F_HPPn peut être un signal analogique, du type d'une tension sinusoïdale dont la fréquence varie en fonction du point de consigne calculé par le contrôleur d'hybridation 34. Mais il peut aussi être sous une autre forme d'information analogique, ou numérique, pourvu qu'il soit (de préférence, comme indiqué ci-dessus) de même nature que le signal F_Grid auquel il se substitue.

Dans des modes de réalisation, un sélecteur 151 permet, par exemple lorsque temporairement l'hybridation n'est pas désirée et/ou lorsqu'une maintenance de l'unité de stockage d'énergie 2 doit être effectuée, de rétablir la fourniture directement du signal de fréquence d'entrée F_Grid, à la place du signal de pilotage F_HPPn de substitution, sur l'entrée correspondante du contrôleur 15 de régulation de la puissance produite $P_{HPP}$. Cela permet de continuer à assurer le service avec le groupe de production sans l'unité de stockage d'énergie 2, comme le ferait l'installation existante conforme au schéma de la figure 1. On appréciera que la fonctionnalité décrite ci-dessus en rapport avec le sélecteur 151 est avantageuse mais nullement obligatoire.

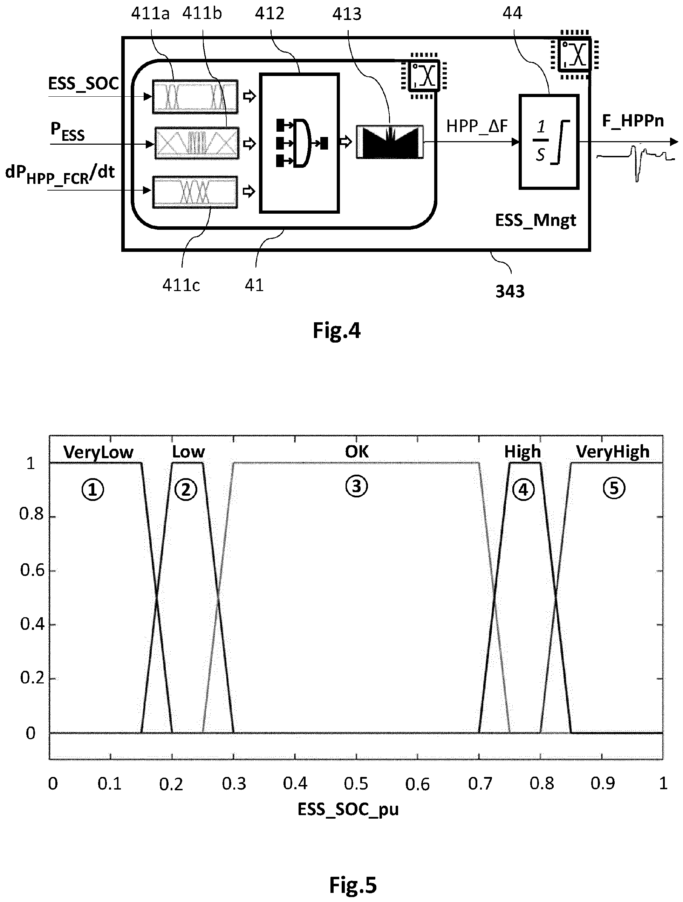

Par contre, la personne du métier appréciera au vu de la description de modes de mise en œuvre qui va être donnée en référence à la figure 4 et aux figures suivantes, que le signal F_HPPn de pilotage du contrôleur de régulation de puissance 15 diffère, du point de vue de son contenu informationnel, du signal de pilotage F_HPP généré par le contrôleur d'hybridation 14 de la figure 2. En effet, et contrairement audit signal F_HPP, le signal F_HPPn de pilotage du contrôleur de régulation de puissance 15 généré par le contrôleur d'hybridation 34 selon des modes de réalisation de l'invention, ne résulte pas d'un filtrage passe-bas du signal F_Grid représentatif de la déviation de fréquence du réseau 3. Son contenu informationnel est plus subtil, et intègre à la gestion du groupe 1,2 de production d'énergie électrique une notion tendancielle. Dans les mises en œuvre du contrôleur d'hybridation 34 proposées par l'invention, cette notion tendancielle est traitée par une approche par Logique Floue (« *Fuzzy Logic* » en anglais).

Corollairement, en effet, le contrôleur d'hybridation 34 selon des modes de réalisation diffère substantiellement du contrôleur d'hybridation 14 conforme à l'art antérieur selon la figure 2, ainsi qu'il va maintenant être décrit en détail. Il permet d'optimiser encore mieux la sollicitation des organes électromécaniques de l'unité de production 2, avec pour résultat une réduction supplémentaire de la fatigue et du vieillissement mécanique de ces matériels.

Le contrôleur d'hybridation 34 délivre en sortie et envoie, par exemple de façon numérique, à l'unité de stockage d'énergie 2 sa consigne de puissance $P_{ESS}\_SP$. Le signal $P_{ESS}\_SP$ peut alors se conformer, par exemple, au protocole de communication industriel de type Modbus précité. En variante, la consigne $P_{ESS}\_SP$ peut être transmise sous forme analogique, par exemple par une commande en courant dans l'intervalle 4-20 mA. Quelle que soit la mise en œuvre pratique, le signal $P_{ESS}\_SP$ a pour fonction de piloter l'unité de stockage d'énergie 2, c'est-à-dire de piloter la puissance $P_{ESS}$ qu'elle consomme et stocke temporairement depuis le réseau, ou bien qu'elle restitue au réseau électrique 3, dans les deux cas pour les besoins du réglage primaire de fréquence (FCR) dudit réseau 3.

Les deux sources de l'énergie électrique délivrée au réseau électrique 3 par le groupe de production, à savoir l'unité de production 1 et l'unité de stockage 2, délivrent chacune audit réseau une puissance électrique qui est fonction des consignes qu'elles reçoivent du contrôleur d'hybridation 34, à savoir la consigne F_HPPn et la consigne $P_{ESS}\_SP$, respectivement. La puissance $P_{ESS}$ fournie ou consommée dans le réseau 3 par l'unité de stockage d'énergie 2 sur la base de la consigne $P_{ESS}\_SP$ qui est calculée par le contrôleur 34, vient s'ajouter à la puissance $P_{HPP\_FCR}$ fournie par l'unité de production électrique 1 au titre de sa contribution au mécanisme de réglage primaire de fréquence (FCR), afin d'avoir une puissance totale $P_{FCR}$ injectée à ce titre sur le réseau 3 qui est en relation avec la déviation de fréquence dudit réseau reflétée par le signal F_Grid. Comme déjà exposé en introduction, les unités de production d'énergie électrique qui participent au réglage primaire de fréquence sont dimensionnées et configurées, avant tout, pour produire une puissance nominale. Sur le schéma de la figure 3, ceci est symbolisé par une consigne Power_SP de puissance nominale, représentée en bas à gauche de la figure. Cette consigne est fournie en entrée du contrôleur de régulation de puissance 15. Cette consigne est modulée par ledit contrôleur 15 en fonction de la déviation de fréquence constatée au niveau du réseau électrique 3, et indiquée par le signal F_Grid. Selon le principe de l'hybridation du groupe de production d'énergie électrique, toutefois, ce n'est pas directement le signal F_Grid qui pilote l'unité de production 2 du point de vue du mécanisme FCR, mais le signal F_HPPn généré par le contrôleur d'hybridation 34.

La personne du métier appréciera que, sur les centrales hydroélectriques, la consigne de puissance nominale Power_SP peut être soit une consigne de puissance électrique à produire soit une consigne de débit d'eau à turbiner. En effet, sur les barrages du type « au cours de l'eau » équipés par exemple de turbines de type Kaplan, un objectif peut être la régulation des niveaux d'eau en amont et/ou en aval de l'installation afin d'assurer la navigabilité du fleuve, la disponibilité d'eau pour l'irrigation des cultures et/ou pour les loisirs aquatiques sur les retenues d'eau, etc. Pour répondre à cet objectif, les unités de production hydrauliques sont, dans ce cas, pilotées suivant une consigne nominale de type débit d'eau à turbiner (« Flow rate set point » en anglais).

Dans tous les cas, la puissance produite par le groupe de production électrique, vue du réseau électrique, est la somme algébrique des puissances produites par l'unité de production 1 et par l'unité de stockage 2 :
[Math. 1]

$$P_{Grid} = P_{HPP} + P_{ESS} \quad (\text{équation } 1)$$

avec :

- $P_{Grid}$ : puissance fournie au réseau électrique 3 par l'unité de production d'énergie électrique 1 et l'unité de stockage 2 ;

- $P_{HPP}$ : puissance fournie par l'unité de production d'énergie électrique 1 comme illustrée par l'équation 2 ;

- $P_{ESS}$ : puissance fournie ou absorbée par l'unité de stockage d'énergie 2.

En outre, la puissance PHPP fournie par l'unité de production d'énergie électrique 1 est donnée par :
[Math. 2]

$$P_{HPP} = P_{Power\_SP} + P_{HPP\_FCR} \quad (\text{équation } 2)$$

avec :

- $P_{Power\_SP}$ : puissance produite en regard de la consigne de puissance Power_SP ; et,
- $P_{HPP\_FCR}$ : variation de puissance de ladite puissance produite en fonction de la déviation de fréquence en regard de la consigne F_HPPn.

Cependant, dans le réglage primaire de fréquence (FCR), la puissance correspondant à ce réglage est seulement la part de la puissance PGrid qui est liée à la contribution des groupes de production raccordés au réseau dans la réponse globale à la déviation de fréquence du réseau électrique 3. Pour le groupe de production considéré ici, la contribution à cette puissance régulatrice est la somme algébrique de la fraction PHPP_FCR de la puissance PHPP produite par l'unité de production 1 au titre de sa contribution au mécanisme FCR et qui est liée seulement à la déviation de fréquence du réseau (indépendamment de la consigne de puissance nominale Power_SP du groupe de production en question), d'une part, et de la puissance PESS qui est fournie ou consommée par l'unité de stockage d'énergie 2, d'autre part, laquelle n'est utilisée que pour les besoins du réglage primaire de fréquence (FCR) :
[Math. 3]

$$P_{FCR} = P_{HPP\_FCR} + P_{ESS} \quad (\text{équation } 3)$$

avec :

- $P_{FCR}$ : puissance de réglage primaire de fréquence, c'est-à-dire la puissance totale correspondant à la contribution du groupe de production destinée à compenser la déviation de fréquence du réseau 3. A noter que $P_{FCR}$ peut être positive quand il convient de faire remonter la fréquence du réseau vers Fo (i.e., quand la production globale est inférieure à la consommation totale sur le réseau 3), mais peut aussi être négative quand la fréquence du réseau est supérieure à Fo (i.e., quand la production globale est supérieure à la consommation totale sur le réseau) et qu'il faut la faire baisser en stockant de l'énergie dans l'unité de stockage 2 ;

- $P_{HPP\_FCR}$ : puissance fournie par l'unité de production 1 liée seulement au réglage primaire de fréquence et en regard de la consigne F_HPPn ;

- $P_{ESS}$ : puissance fournie ou consommée par l'unité de stockage d'énergie 2, qui peut être positive ou négative (pour les raisons indiquée *supra* concernant $P_{FCR}$) et en regard de la consigne $P_{ESS}\_SP$.

La puissance de réglage primaire de fréquence PFCR est contractualisée entre le gestionnaire/exploitant du réseau électrique 3 et le producteur d'énergie qui est le gestionnaire/exploitant du groupe de production électrique. Un coefficient (KFCR), dont la valeur peut être liée au moins en partie à la consigne de puissance nominale Power_SP, mais pas nécessairement et/ou pas uniquement à cette consigne, est fixé et contractualisé entre les deux parties :

[Math. 4]

$$P_{FCR} = K_{FCR} \times \Delta F \qquad (\text{équation } 4)$$

avec :

- $P_{FCR}$ : puissance de réglage primaire de fréquence, attendue du groupe de production par l'exploitant du réseau électrique 3 ;

- $K_{FCR}$ : coefficient contractuel convenu entre le producteur et l'exploitant du réseau 3 ;

- $\Delta F$ : différence entre la fréquence nominale et la fréquence du réseau à l'instant t.

Le pilotage des deux sources d'énergie du groupe de production (i.e., l'unité de production 1 et l'unité de stockage 2) est réalisé sous la commande du contrôleur d'hybridation 34 afin de satisfaire à chaque instant les équations de fonctionnement (1), (2), (3) et (4) ci-dessus.

En référence au schéma-bloc de la figure 3, les principaux éléments fonctionnels du contrôleur d'hybridation 34 sont les suivants.

Le contrôleur d'hybridation 34 comprend un premier bloc 341 (noté "FCR" à la figure) qui calcule, à l'instant t, la puissance $P_{FCR}$ cible qui est attendue par l'exploitant du réseau électrique au titre de la contribution au réglage primaire de fréquence par le groupe de production concerné. Ce bloc 341 reçoit en entrée le signal F_Grid représentatif la déviation de fréquence du réseau et le coefficient $K_{FCR}$ convenu contractuellement avec le producteur. Et il délivre en sortie une consigne correspondant à la puissance $P_{FCR}$ de réglage primaire de fréquence, c'est-à-dire la valeur de la puissance qui est attendue du groupe de production (voir équation 4 plus haut) indépendamment de la consigne de puissance nominale Power_SP.

Le contrôleur d'hybridation 34 comprend un deuxième bloc 342 qui figure un opérateur de soustraction, auquel la consigne $P_{FCR}$ est fournie en entrée telle qu'elle est délivrée par le bloc 341 ci-dessus. Plus particulièrement, la consigne $P_{FCR}$ est délivrée sur l'entrée positive "+", ou entrée additive de l'opérateur 342.

Un troisième bloc 343 du contrôleur d'hybridation 34, noté "ESS_Mngt" à la figure 3, est un module de gestion de l'unité de stockage d'énergie 2. La personne du métier appréciera que ce module 343 génère en sortie le signal F_HPPn de pilotage du contrôleur de régulation de puissance 15, lequel contrôleur 15 commande l'unité de production 1 à travers les consignes C1 et C2 sur la base de ce signal et sur la base en outre de la consigne de puissance nominale Power_SP comme il a déjà été dit dans ce qui précède. Le module de gestion 343 reçoit en entrée les trois signaux ESS_SOC, $P_{ESS}$ et la variation temporelle $dP_{HPP\_FCR}/dt$ de la puissance $P_{HPP\_FCR}$, et délivre en sortie le signal F_HPPn de pilotage de l'unité de production d'énergie électrique 1. Des modes de réalisations de ce module de gestion seront décrits plus bas.

Toujours en référence à la figure 3, le contrôleur d'hybridation 34 comprend enfin un quatrième bloc 344, qui figure un modèle temporel de l'unité de production hydroélectrique 1. Ce modèle 344 permet d'obtenir, par un calcul, la puissance $P_{HPP\_FCR}$ produite par l'unité 1 sur la base de la consigne F_HPPn envoyée par le module de gestion 343. Dans l'exemple, le modèle 344 est un modèle numérique du comportement de l'unité de production électrique 1, par exemple ici une unité hydroélectrique 1. Ce modèle numérique est, par exemple, un modèle du premier ordre s'appuyant sur une cartographie 3D permettant d'obtenir facilement une estimation de la composante en puissance $P_{HPP\_FCR}$ produite par l'unité 1 en lien avec le signal de consigne F_HPPn. On rappelle en effet que la puissance $P_{HPP}$ produite par l'unité de production 1 a deux composantes (voir équation 2 donnée plus haut) :

- une composante majoritaire liée à la consigne de puissance nominale Power_SP, correspondant à la puissance électrique à produire ou au débit turbiné, et qui représente généralement plus de 90% environ de la puissance effectivement produite par l'unité 1 ; et,

- une composante minoritaire $P_{HPP\_FCR}$ liée à la déviation de fréquence du réseau électrique 3, qui correspond à la contribution du groupe de production considéré au mécanisme de réglage primaire de fréquence, et qui représente généralement moins de 10% environ de la puissance effectivement produite par l'unité 1.

Or, il est difficile de distinguer ces deux composantes dans une mesure de la puissance électrique $P_{HPP}$ produite par l'unité hydroélectrique 1 qui pourrait être effectuée en pratique. Dit autrement, il est difficile d'en extraire la composante minoritaire $P_{HPP\_FCR}$ précitée. En effet l'utilisation de techniques de filtrages disponibles manque de robustesse en raison du fait que toute mesure de la puissance $P_{HPP}$ effective est fortement perturbée et bruitée. En effet sur les installations hydrauliques, les variations de débit induites par le mécanisme de réglage primaire de fréquence (FCR) génèrent des ondes de chocs et de pressions qui, par écho, génèrent de nouvelles variations de puissance en plus de celles recherchées par le réglage primaire de fréquence. Il en résulte qu'une mesure de puissance est fortement bruitée et difficilement exploitable. La détermination d'une valeur estimée de la puissance $P_{HPP\_FCR}$ correspondant seulement à la contribution du groupe de production au réglage primaire de fréquence (FCR) au travers de sa consigne F_HPPn sur la base du modèle 344 apporte une solution à ce problème. La personne du métier appréciera que le problème évoqué ci-dessus peut ne pas se présenter concernant certaines unités de production d'énergie électrique, ou alors avec une moindre acuité. C'est pourquoi le recours au modèle 344 est une option avantageuse, mais n'est nullement indispensable.

Dans tous les cas, une mesure ou, comme ici, une estimation de la valeur de la composante minoritaire $P_{HPP\_FCR}$ de la puissance produite par l'unité de production 1 au titre de la contribution du groupe de production au réglage primaire de fréquence (mécanisme FCR) est délivré sur l'entrée négative "-" (entrée soustractive) de l'opérateur de soustraction 342. Ainsi, et sur la base de l'équation 3 donnée plus haut, qui lie la puissance $P_{FCR}$ à la puissance $P_{HPP\_FCR}$ et à la puissance $P_{ESS}$, l'opérateur 342 peut délivrer en sortie la consigne $P_{ESS}\_SP$ de commande de la puissance $P_{ESS}$ de l'unité de stockage 2. Comme on l'aura compris, cette consigne $P_{ESS}\_SP$ est positive si la puissance $P_{FCR}$ pour le groupe de production est supérieure à la puissance $P_{HPP\_FCR}$ produite par l'unité 1 au titre du mécanisme FCR, en sorte que cette dernière doit être complétée par une énergie restituée par l'unité de stockage 2. Inversement, la consigne $P_{ESS}\_SP$ est négative si la puissance totale $P_{FCR}$ pour le groupe de production est inférieure à la puissance $P_{HPP\_FCR}$ produite par l'unité 1 au titre du mécanisme FCR en sorte que cette dernière doit être diminuée par stockage d'énergie dans l'unité 2.

En d'autres termes, la consigne de puissance $P_{ESS}\_SP$ est adressée par le contrôleur d'hybridation 34 à l'unité de stockage 2, et elle est le résultat en sortie de l'opérateur 342 : c'est la différence entre la puissance $P_{FCR}$ attendue du groupe de production par le gestionnaire de réseau pour le mécanisme de réglage primaire de fréquence (FCR) pour le réseau électrique 3, d'un côté, et la valeur estimée de la puissance $P_{HPP\_FCR}$ produite par l'unité de production (voir équation 2 plus haut) au titre dudit réglage primaire, de l'autre côté.

Selon les modes de mise en œuvre de l'invention, et contrairement au cas de l'hybridation par filtrage passe-bas du signal F_Grid mise en œuvre dans le groupe de production connu, illustré à la figure 2 précédemment décrite, la stratégie de gestion de la charge de l'unité de stockage d'énergie 2 n'a pas pour effet de piloter la charge ou la décharge de ladite unité 2 sur le réseau électrique 3 sans autre considération que la puissance qu'il convient de fournir ou au contraire d'absorber, respectivement, en application du mécanisme de réglage primaire de fréquence (FCR).

Au contraire, l'invention propose d'utiliser, opportunément, une configuration établie de l'unité de production 1 dans laquelle elle se trouve mais qui devrait être modifiée en raison de l'évolution du signal F_Grid représentatif de la déviation de fréquence du réseau, en maintenant éventuellement cette configuration, en fonction de l'état de charge de l'unité de stockage 2. Notamment, si l'unité de production 1 est configurée via ses consignes C1 et C2 de manière à produire plus d'énergie qu'il ne devient requis par le mécanisme FCR en raison d'une augmentation de la fréquence du réseau 3 reflétée par le signal F_Grid, on peut maintenir la configuration devenue "surdimensionnée" du seul point de vue du mécanisme FCR, pour charger l'unité de stockage plus avant lorsque son état de charge (SOC) est inférieur à 100%, et d'autant plus (i.e., d'autant plus longtemps) si son état de charge est inférieur à 50%. En réalité, on pourra maintenir la configuration "surdimensionnée" de l'unité de production 1, plus ou moins, tant que l'état de charge SOC de l'unité de stockage 2 reste inférieur à un optimum de 70% environ, c'est-à-dire tant que ladite unité 2 peut absorber la surproduction d'énergie électrique produite par l'unité 1. D'autres seuil sur l'état de charges (SOC) peuvent également être utilisés.

Dit autrement, la stratégie mise en œuvre dans le module 343 permet, lorsque l'unité de stockage d'énergie 2 est déchargée et lorsque l'unité de production électrique 1 produit plus de puissance que demandée, par exemple lorsque la fréquence du réseau est au-dessous de 50Hz mais qu'elle est en train d'augmenter, de laisser la consigne $P_{HPP}\_SP$ de production de l'unité de production électrique 1 à son point de fonctionnement au lieu de l'abaisser, et d'utiliser ce surplus de puissance produite ("surplus" considéré vis-à-vis de la puissance $P_{FCR\_HPP}$ attendue par le réseau 3) pour recharger l'unité de stockage 2 tant qu'elle peut accepter plus d'énergie à stocker. Ainsi, dans le cas où le besoin d'énergie au titre du réglage primaire du réseau s'inverserait de nouveau avant que l'unité de stockage 2 ait été complètement chargée, la configuration de l'unité de production 1 qui a été maintenue peut redevenir adaptée. Dans un tel scénario, on a évité de modifier les consignes C1 et C2 de la turbine 4 de la centrale hydraulique 1. On a donc épargné la mécanique des actionneurs des vannes 5 et des pales 6 du rotor 7, prolongeant leur durée de vie opérationnelle.

Bien entendu, la même stratégie selon des mises en œuvre de l'invention conduit, inversement, si l'unité de production 1 est dans une configuration dans laquelle elle ne génère pas, ou bien génère seulement peu de puissance $P_{HPP\_FCR}$ au titre de sa contribution au mécanisme FCR par exemple parce que la fréquence du réseau est inférieure à la fréquence nominale Fo, mais que l'évolution du signal F_Grid indique ou laisse présager que cette configuration devrait être modifiée, à maintenir la configuration de l'unité de production (i.e., de maintenir ses consignes C1 et C2 inchangées alors qu'il conviendrait de les relever par stricte application du mécanisme FCR), s'il s'avère en outre que l'unité de stockage 2 est à un état de charge SOC élevé, voire tant que son état de charge n'est pas considéré comme trop bas, c'est-à-dire n'est pas trop voisin de 0%. Dans ce scénario aussi on fait l'économie d'ajustement des consignes C1 et C2 de l'unité de production qui peuvent s'avérer inutiles en cas de nouvelle inversion de tendance.

En résumé, la stratégie de gestion de la charge de l'unité de stockage d'énergie 2 qui est mise en œuvre dans le module 343 consiste en une temporisation conditionnelle, en fonction de l'état de charge courant de ladite unité de stockage 2, de l'adaptation des consignes de fonctionnement de l'unité de production d'énergie électrique 1. Comme on l'aura compris, ceci est réalisé par le module 343 via la génération du signal F_HPPn, lequel induit la consigne de puissance $P_{ESS}$_SP de l'unité de stockage 2 par le biais de l'équation 3 qui est vérifiée au niveau de l'opérateur de soustraction 342. L'effet technique obtenu par cette stratégie de temporisation, sous conditions, des variations du signal F_HPPn qui pilote l'unité 1 dans le cadre de son hybridation avec l'unité de stockage 2, est qu'on pilote l'unité 1 avec une optimisation vertueuse de la variation pilotée de son point de fonctionnement. Cela permet en effet l'exploitation avantageuse de l'unité de stockage d'énergie 2 sur l'ensemble de sa plage de fonctionnement, i.e., avec un SOC amené à évoluer souvent et plus largement dans la plage allant de sensiblement 0% à sensiblement 100%. Le résultat obtenu en la sollicitant ainsi plus régulièrement et avec de plus grandes amplitudes de charge et de décharge, est qu'on réduit la dégradation de sa capacité effective de stockage. Mais aussi et en même temps, on réduit encore, en moyenne, le vieillissement des organes mécaniques de réglage de la production d'énergie par l'unité de production 1. En effet, on les sollicite potentiellement moins souvent pour des modifications qui, sinon, seraient appelées de façon plus rapprochée dans le temps par l'évolution naturelle de la déviation de fréquence du réseau 3. Dit autrement encore, la capacité de ballast de l'unité de stockage d'énergie 2 est désormais pleinement utilisée, ce qui n'est pas le cas avec un pilotage par filtrage passe-bas du signal F_Grid dans des réalisations conformes à la figure 2.

La personne du métier appréciera que la notion de « tendance » évoquée dans ce qui précède en relation avec l'évolution de la déviation de fréquence du réseau, peut se déduire de l'observation de la dérivée, par rapport au temps t, de la puissance $P_{HPP\_FCR}$ produite par l'unité de production 1 pour les besoins du mécanisme de réglage primaire de fréquence du réseau électrique 3. Cette dérivée $dP_{HPP\_FCR}/dt$ est plus facile à obtenir par calcul, notamment à partir du modèle 344 qui est un modèle simplifié, qu'une tendance d'évolution du signal F_Grid représentatif de la déviation de fréquence du réseau, laquelle serait à obtenir par des mesures dans ledit signal. C'est pourquoi, dans des modes de réalisation, le module 343 de gestion reçoit en entrée la dérivée par rapport au temps $dP_{HPP\_FCR}/dt$ de la puissance $P_{HPP\_FCR}$ telle qu'estimée par le modèle 344 de l'unité de production d'énergie électrique 1. Cette forme de réalisation est particulièrement avantageuse car on calcule déjà $P_{HPP\_FCR}$ à partir du modèle 344. Le calcul de sa dérivée $dP_{HPP\_FCR}/dt$ est donc facile à obtenir et il est particulièrement intéressant de le faire via le modèle 344 car une telle dérivée serait d'autant plus difficile à obtenir, sensible et imprécise si la puissance $P_{HPP\_FCR}$ était obtenue par une mesure physique.

Par ailleurs, un autre enseignement de la présente invention est que les conditions et la mesure dans lesquelles est réalisée la temporisation des modifications du signal F_HPPn fourni en entrée du contrôleur 15 qui pilote l'unité de production 1, n'ont pas besoin de résulter d'analyses statistiques très poussées, au demeurant difficiles à exécuter même avec un mécanisme d'apprentissage profond. Au contraire, une approche de la définition des modifications du signal F_HPPn qui sont nécessaires pour implémenter une gestion plus dynamique de l'unité de stockage d'énergie 2 telle qu'exposé dans ce qui précède, relève plutôt de plans d'expérience basés sur la compréhension des phénomènes tangibles qui sont derrière les équations (1), (2), (3) et (4), non seulement à chaque instant mais aussi et surtout dans leur évolution constatée sur une certaine fenêtre temporelle d'observation. Dans le monde réel, on n'a jamais accès à toutes les données dont on a besoin pour cartographier chaque relation possible entre les différentes variables en cause. Mais on peut déterminer quelques stratégies clés permettant d'isoler et d'explorer les mécanismes entre certaines de ces variables. C'est ce qui est proposé avec les modes de réalisation du module de gestion 343 à base de logique floue, qui vont maintenant être décrits.

En référence au schéma fonctionnel de la figure 4, le module de gestion 343 peut être mise en œuvre sous la forme d'un processeur à logique floue 41 (dit aussi "processeur à inférences floues", voire plus simplement "processeur à inférences"). Ce calculateur est adapté pour délivrer une variable de sortie, à savoir le signal F_HPPn de pilotage de l'unité de production 1 à fournir en entrée du contrôleur de régulation de puissance 15, et pour recevoir trois variables d'entrée à savoir :

- le signal ESS_SOC représentatif de l'état de charge (SOC) de l'unité de stockage d'énergie 2 ;

- l'information $P_{ESS}$ représentative de la puissance électrique délivrée ou absorbée par l'unité de stockage d'énergie dans le réseau électrique 3 ; et,

- la dérivée par rapport au temps $dP_{HPP\_FCR}/dt$ de la puissance $P_{HPP\_FCR}$ telle qu'estimée par le modèle 344 figuré sur le schéma de la figure 3.

Dans des modes de réalisation, le processeur à inférences 41 reçoit en entrée le triplet formé des signaux ESS_SOC, de la mesure de puissance $P_{ESS}$ de l'unité de stockage 2 et de la dérivée par rapport au temps $dP_{HPP\_FCR}/dt$ de la puissance $P_{HPP\_FCR}$. Les valeurs numériques concernées sont normalisées, par exemple :

- entre 0 et 1 pour le signal ESS_SOC, la normalisation résultant du ratio entre l'énergie stockée dans l'unité de stockage sur la capacité de stockage maximum de l'unité de stockage ;

- entre -5 et 5 pour la puissance $P_{ESS}$ délivrée ou absorbée par l'unité de stockage d'énergie 2, cette normalisation résultant du ratio de la puissance fournie ou absorbée $P_{ESS}$ sur la puissance maximum du groupe de production hybridé et contractualisée avec le gestionnaire de réseau $P_{FCR\_max}$. Dans notre exemple ces valeurs -5 et +5 de la plage de variation normalisée pour la puissance $P_{ESS}$ découlent du ratio entre la puissance maximum de l'unité de stockage 2 (par exemple 650 kW) sur la puissance maximum du groupe de production, (par exemple 3 mégawatts, MW). On rappelle que les valeurs de $P_{ESS}$ peuvent aussi être négatives lorsque la puissance $P_{ESS}$ est absorbée pour être stockée, cf. équation (1) lorsque $P_{Grid}$ doit diminuer à valeur constante de $P_{HPP}$) ; et,

- entre -1 et + 1 pour la dérivée par rapport au temps $dP_{HPP\_FCR}/dt$ de la puissance $P_{HPP\_FCR}$ exprimée en W/s, la normalisation résultant du ratio de la variation de puissance mesurée en W/s par la variation de puissance maximum. On rappelle que la dérivée $dP_{HPP\_FCR}/dt$ peut prendre des valeurs négatives lorsque la puissance $P_{HPP\_FCR}$ diminue.

La personne du métier appréciera que l'indicateur la puissance $P_{ESS}$ délivrée ou absorbée par l'unité de stockage d'énergie 2 permet de rendre compte du niveau de puissance sollicité sur les batteries. Entre -1 et 1 on est donc dans la plage de fonctionnement nominal du système de stockage ; au-delà on est dans une plage de saturation et l'unité de production doit être mise à contribution car l'unité de stockage est saturée. Si les batteries n'étaient pas sous-dimensionnées, en ce sens que la totalité de la puissance demandée par l'exploitant du réseau pour le réglage de fréquence pourrait être fournie par les batteries (i.e., dans 100% des cas) alors le ratio serait strictement compris entre -1 et +1 et par conséquent l'unité de production ne serait jamais sollicitée en puissance pour aider l'unité de stockage. Finalement les paramètres de fonctionnement de l'unité de production ne seraient adaptés que pour corriger l'état de charge de l'unité de stockage d'énergie.

Les valeurs d'entrée ainsi normalisées sont exprimées sous la forme d'un scalaire (un scalaire signé, le cas échéant) en base dite "base unitaire", c'est-à-dire de manière relative à l'unité ou "par unité" ou encore "p.u." (« per unit » en anglais). Elles sont notées $ESS\_SOC\_pu$, $P_{ESS}\_pu$ et $dP_{HPP\_FCR}\_pu$ dans la suite et aux figures 5, 6 et 7, respectivement.

Les étapes du processus mis en œuvre dans le processeur à inférences floues 41 sont les suivantes :

- une étape de fuzzification des valeurs d'entrée normalisées, qui est exécutée par les modules de fuzzification 411a, 411b et 411c afin d'obtenir une représentation symbolique (sous forme de symboles linguistiques) des valeurs numériques d'entrée, à savoir les valeurs normalisées $ESS\_SOC\_pu$, $P_{ESS}\_pu$ et $dP_{HPP\_FCR}\_pu$, respectivement;

- une étape d'évaluation des règles d'inférence (ou étape d'inférence) qui est exécutée par le bloc 412 du processeur 41, et qui consiste à déterminer la partition floue de la valeur de sortie en combinant les entrées fuzzifiées au moyen d'opérateurs flous et grâce à un jeu de règles d'inférence ; et, enfin,

- une étape de défuzzification des résultats de l'étape d'inférence, qui est exécutée par le module de défuzzification 413 et qui permet à partir d'un résultat en représentation symbolique d'obtenir une valeur numérique en sortie notée $HPP\_\Delta F$.

Les graphes montrés à la figure 5 sont un exemple de fonctions d'appartenance qui sont mises en œuvre dans le module de fuzzification 411a du processeur flou 41. Ces fonctions d'appartenance font correspondre à chaque valeur numérique $ESS\_SOC\_pu$ de l'état de charge de l'unité de stockage d'énergie 2 (exprimée en p.u.) qui est reçue en entrée, une description ou représentation symbolique plus facilement manipulable grâce au paradigme de la logique floue. Plus particulièrement, les fonctions d'appartenance décrivent le degré d'appartenance aux symboles en question en fonction de la valeur numérique de l'entrée. La figure 5 présente ainsi un exemple de fonctions d'appartenance qui font correspondre la valeur numérique de l'état de charge de l'unité de stockage 2 à des symboles différents (aussi appelés "symboles flous" ou "valeurs floues") qui permettent de décrire cette entrée. Dans l'exemple non limitatif tel que représenté, ces symboles sont ici au nombre de cinq et peuvent être définis au travers des fonctions d'appartenance représentées de la gauche vers la droite sur la figure 5 : "VeryLow" lorsque la valeur numérique $ESS\_SOC\_pu$ reçue en entrée est considérée comme signifiant que le SOC de l'unité 2 est très bas ; "Low" pour un SOC considéré comme bas ; "OK" pour un SOC considéré comme optimum, "High" lorsque qu'on considère le SOC comme haut, et "VeryHigh" lorsqu'on considère qu'il est très haut. Les fonctions d'appartenance sont repérées à la figure 5 par des numéros 1 à 5 dans un petit cercle, dans cet ordre en allant de la gauche vers la droite sur ladite figure. Dans l'exemple représenté à la figure 5, elles ont la forme classique de trapèzes. Cette forme n'est toutefois pas obligatoire. Toute autre forme, par exemple des gaussiennes (fonctions "en cloche") peuvent être préférées, même si des trapèzes présentent l'avantage de la simplicité. En pratique, ces tables peuvent être mémorisées sous la forme de tables de valeurs à une dimension, à raison d'une table pour chacune des fonctions d'appartenance. Chaque table donne une valeur (comprise entre 0 et 1) du degré d'appartenance (aussi appelé degré de vérité) au symbole concerné, de la valeur numérique ESS_SOC_pu reçue en entrée.

Ainsi par exemple, si la valeur numérique normalisée ESS_SOC_pu qui est reçue est égale à 0.18, les fonctions d'appartenance ① et ② associent à cette valeur numérique normalisée, la valeur floue "VeryLow" ainsi que la valeur floue "Low" avec un degré d'appartenance respectif qui est de 0.5 dans les deux cas (ce qui signifie que l'appartenance de ladite valeur numérique normalisée au symbole "VeryLow" et au symbole "Low" est vraie dans les deux cas à 50%. Le degré d'appartenance de la valeur numérique ESS_SOC_pu = 0.18 aux autres symboles flous est nul. Selon un autre exemple, la fonction d'appartenance ③ associe la valeur floue "OK" aux valeurs numériques ESS_SOC_pu = 0.4, ESS_SOC_pu = 0.5 et ESS_SOC_pu = 0.6 si elles sont reçues en entrée, et les quatre autres fonctions d'appartenance leurs associent les quatre autres symboles/valeurs floues avec pour chacune un degré de vérité qui est nul.

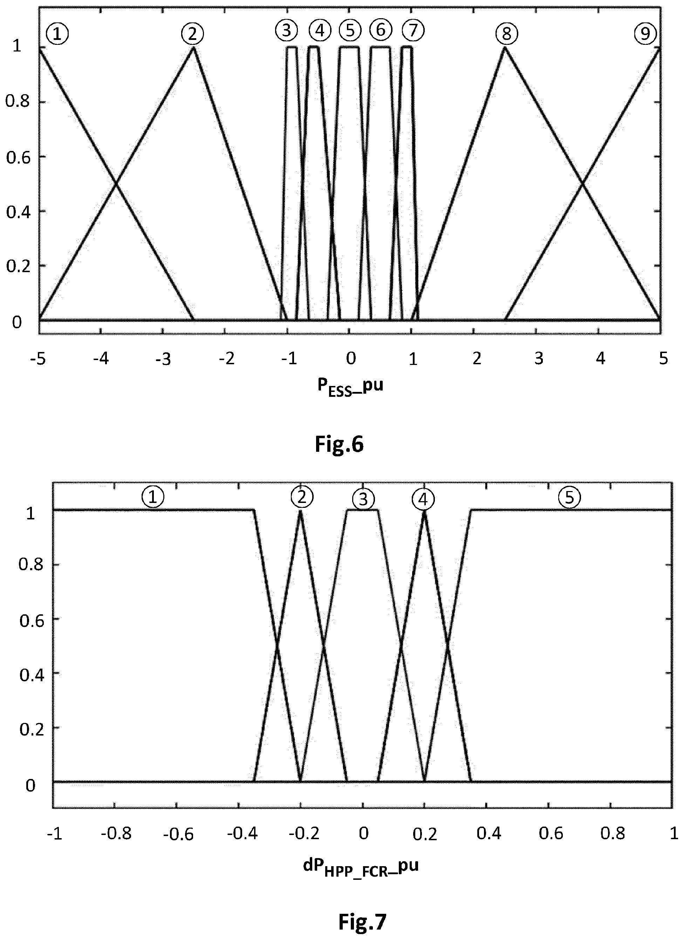

Les cinq graphes de la figure 6 montrent pareillement un exemple de fonctions d'appartenance qui sont mises en œuvre dans le module de fuzzification 411b du processeur flou 41. Ces fonctions d'appartenance, qui sont au nombre de neuf dans cet exemple, font correspondre à chaque valeur numérique normalisée $P_{ESS}$_pu de la puissance de l'unité de stockage d'énergie 2 (exprimée en p.u.) reçue en entrée, neuf symboles ou valeurs floues qui sont par exemple, respectivement, et de la gauche vers la droite sur la figure 6 : "ChargeSatVeryHigh" lorsque la puissance $P_{ESS}$ est saturée et charge l'unité de stockage 2 de manière très importante ; "ChargeSatHigh" lorsque la puissance $P_{ESS}$ est saturée et charge l'unité de stockage 2 de manière importante) ; "ChargeHigh" lorsque la puissance $P_{ESS}$ charge sans saturation l'unité de stockage 2 de manière importante ; "ChargeLow" lorsque la puissance $P_{ESS}$ charge sans saturation l'unité de stockage 2 de manière adéquate ; "Zero" lorsque la puissance $P_{ESS}$ est négligeable ; "DischargeLow" lorsque la puissance $P_{ESS}$ décharge sans saturation l'unité de stockage 2 de manière adéquate ; "DischargeHigh" lorsque la puissance $P_{ESS}$ charge sans saturation l'unité de stockage 2 de manière importante ; "DischargeSatHigh" lorsque la puissance $P_{ESS}$ est saturée et décharge l'unité de stockage 2 de manière importante ; et enfin "DischargeSatVeryHigh" lorsque la puissance $P_{ESS}$ est saturée et décharge l'unité de stockage 2 de manière très importante. Le nombre et la forme des fonction d'appartenance de la figure 6 sont donnés à titre d'exemple non limitatif.

Les graphes de la figure 7 montrent un exemple de cinq fonctions d'appartenance qui sont mises en œuvre dans le module de fuzzification 411c du processeur flou 41, pour associer aux valeurs numériques normalisées dP_{HPP_FCR}_pu représentatives de la variation de puissance $P_{HPP\_FCR}$ de l'unité hydroélectrique 1 qui sont reçues en entrée, les cinq symboles flous suivants avec un degré d'appartenance associé : "DecreaseHigh" lorsque la puissance $P_{HPP\_FCR}$ décroit rapidement ; "DecreaseLow" lorsque la puissance $P_{HPP\_FCR}$ décroit lentement ; "Zero" lorsque la puissance $P_{HPP\_FCR}$ n'évolue pas ; "IncreaseLow" lorsque la puissance $P_{HPP\_FCR}$ croit lentement ; et "IncreaseHigh" lorsque la puissance $P_{HPP\_FCR}$ croit rapidement. Le nombre et la forme des fonction d'appartenance de la figure 7 sont donnés à titre d'exemple non limitatif.

Les règles d'inférence mises en œuvre dans le bloc 412 sont des règles qui expriment l'influence des variables floues en entrée dudit bloc dans la valeur de sa variable floue de sortie. Ces règles logiques permettent de combiner les entrées entre elles et de définir la valeur de sortie du processeur flou. Elles s'expriment sous la forme de l'énumération de N règles d'implication logique, où N est un nombre entier supérieur à l'unité (N>1), lesquelles règles étant du type suivant :
« Règle Rn : si "Condition n1" sur l'entrée 1 et/ou "Condition n2" sur l'entrée 2 et/ou "Condition n3" sur l'entrée 3 alors "Action n" sur la sortie » Et ceci pour n compris entre 1 et N.

Dans le jargon de la personne de métier, pour chacune des *N* règles, les conditions ci-dessus sont appelées "antécédents" et l'action qui en résulte est appelée "conséquence" de la règle. L'évaluation de ces *N* règles différentes se fait à l'aide de l'opérateur logique "OU". En effet, une telle énumération est comprise, en accord avec la pratique du langage courant, dans le sens :

| | |
|---|---|
| « Si... et/ou si... alors... (Règle 1), | ou bien |
| Si... et/ou si... alors... (Règle 2), | ou bien |
| (...) | ou bien |
| Si... et/ou si... alors... (Règle n), | ou bien |
| (...) | ou bien |
| Si... et/ou si... alors... (Règle *N*) ». | |

De telles règles définissent un moteur d'inférence, aussi appelé modèle flou, par exemple un modèle connu sous le nom de modèle de type *Mamdani,* dans lequel les antécédents et les conséquences des règles sont des propositions floues.

A titre d'exemple, le tableau de la figure 8 donne une liste non exhaustive de règles d'inférence qui, dans un exemple, peuvent être évaluées dans le moteur d'inférence 412 du processeur flou 41 de la figure 4. Cette liste est partielle car, en principe, on peut avoir jusqu'à 225 règles combinant les cinq valeurs floues possibles de la première entrée ESS_SOC_pu, les neuf valeurs floues possibles de la seconde entrée $P_{ESS}$_pu et les cinq valeurs floues possibles de la troisième entrée dP_{HPP_FCR}_pu, lesquelles valeurs floues ont été présentées plus haut en référence aux figures 5, 6 et 7, respectivement. Dans ce tableau, les trois premières colonnes donnent les valeurs floues des trois entrées (*i.e.,* les antécédents), respectivement ESS_SOC_pu, $P_{ESS}$_pu et $dP_{HPP\_FCR}$_pu après la fuzzification par les blocs 411a, 411b et 411c, respectivement. La cinquième et dernière colonne donne les valeurs floues de la sortie qui sont impactées par l'évaluation de chaque règle présentée ici, lorsque ladite règle est vérifiée en sortie du moteur d'inférence 412 (i.e., les conséquences). La personne du métier appréciera que les valeurs floues des variables d'entrées ESS_SOC_pu, $P_{ESS}$_pu et $dP_{HPP\_FCR}$_pu qui sont indiquées dans les trois premières colonnes et les valeurs floues correspondant à la variable de sortie HPP_$\Delta$F qui sont indiquées dans la cinquième colonne ne sont en réalité que des symboles en logique floue desdites variables, qui sont pondérées à chaque fois par un certain degré de vérité associé (lequel ne ressort pas de la lecture du tableau en lui-même). Enfin, pour que l'exemple soit parlant, la quatrième colonne du tableau contient pour chacune de ces règles, un commentaire en langage naturel, sur l'effet attendu sur le système, par la combinaison des entrées floues et des sorties floues. Comme la personne du métier l'aura compris, chaque règle consiste en un raisonnement "flou" qui fait correspondre à chaque combinaison des valeurs floues des variables d'entrée (les antécédents) une implication ou conclusion sur les valeurs floues de la variable de sortie (la conséquence) avec un degré de vérité de la valeur floue de chaque sortie (la conséquence) que lui confèrent les degrés de vérité respectifs des antécédents associés.

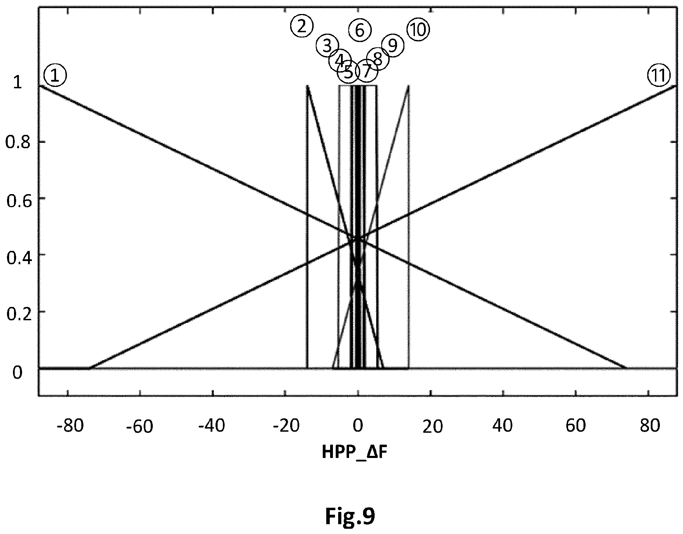

Les graphes de la figure 9 montrent un exemple de fonctions d'appartenance qui sont mises en œuvre dans le module de défuzzification 413 du processeur flou 41. Ces fonctions d'appartenance, qui sont au nombre de onze dans cet exemple, font correspondre la valeur numérique de la valeur HPP_$\Delta$F en sortie du processeur flou 41 aux différents symboles qui permettent de décrire cette sortie. On notera que la valeur HPP_$\Delta$F (exprimée en mHz/s) en sortie du processeur flou 41 correspond à la variation attendue de la consigne F_HPPn de réglage primaire de fréquence (FCR) de l'unité de production d'énergie électrique 1, qui est fonction des valeurs des variables d'entrée ESS_SOC_pu, PESS_pu et dPHPP_FCR_pu fournies en entrée dudit contrôleur 41. Les onze symboles ou valeurs floues qui sont respectivement associées aux onze fonctions d'appartenance représentées de la gauche vers la droite sur la figure 9, sont par exemple : "DecreaseSuperHigh" lorsque la variation de la consigne décroît très-très rapi-dement ; "DecreaseVeryHigh" lorsque la variation de la consigne décroît très rapidement ; "DecreaseHigh" lorsque la variation de la consigne décroît rapidement ; "DecreaseMed" lorsque la variation de la consigne dé-croît moyennement ; "DecreaseLow" lorsque la variation de la consigne décroît lentement ; "Zero" lorsque la variation de la consigne ne présente pas de changement ; "IncreaseLow" lorsque la variation de la consigne croît lentement ; "IncreaseMed" lorsque la variation de la consigne croît moyennement ; "IncreaseHigh" lorsque

la variation de la consigne croît rapidement ; "Increase-VeryHigh" lorsque la variation de la consigne croît très rapidement ; et enfin "IncreaseSuperHigh" lorsque la variation de la consigne croît très-très rapidement. Ces onze fonctions d'appartenance correspondent également aux onze valeurs floues de sorties possibles pour la cinquième et dernière colonne de la Fig.8. La prise en compte de la pondération des onze valeurs floues de la variable de sortie avec le degré de vérité qui leur est associé à l'issue de l'évaluation des N règles d'inférence R1 à RN se fait par l'opération, dite opération d'agrégation, mise en œuvre par le moteur d'inférence flou 412 de la figure 4. Finalement, le passage entre le résultat flou issu du moteur d'inférence flou 412 et la valeur numérique de la variation de consigne est opéré dans l'étape de défuzzification mise en œuvre par le module de défuzzification 413 du processeur flou 41. Cette étape permet de transformer le résultat de l'agrégation des implications floues issues de l'évaluation des N règles R1 à RN sous forme symbolique en une unique valeur numérique de sortie, notée HPP_$\Delta$F à la figure 4. Cette valeur numérique peut être obtenue via le calcul du centre de gravité ou tout autre méthode, appliquée sur le résultat de sortie de l'opération d'agrégation. Dit autrement, la valeur numérique délivrée en sortie du module de défuzzification 413 est une valeur quantitative qui permet de représenter la combinaison des valeurs floues de sortie indiquées dans la cinquième colonne du tableau de la figure 8.

D'un point de vue pratique, dans le mode de réalisation proposé ici, une implémentation de type *Mamdani* est par exemple réalisée afin de mettre en œuvre le moteur d'inférence 412, l'agrégation des résultats du moteur d'inférence, puis l'étape de défuzzification 413. Ainsi, lors de la mise en œuvre de chaque règle d'inférence de 412 qui sont considérées vraies pour une combinaison des entrées, une valeur non-nulle de degré de vérité est associée à la variable de sortie floue correspondant à deux variables d'entrée floues ayant des degrés de vérités non nuls pour la règle en question. Le degré de vérité de la variable de sortie peut par exemple correspondre au minimum entre les deux degrés de vérités des deux variables d'entrées non-nulles. Ce degré de vérité non-nul de la variable de sortie peut être appliqué sur la courbe représentative de la fonction d'appartenance du symbole de la variable de sortie, afin par exemple de l'écrêter à un niveau maximum correspondant au degré de vérité en question. L'application de ce principe sur l'ensemble des règles du moteur d'inférence permet de générer, pour chaque symbole flou possible de la variable de sortie, un ensemble de fonctions d'appartenance écrêtées. Les fonctions d'appartenance ainsi écrêtées pour l'ensemble des symboles flous possibles de la variable de sortie peuvent ensuite être agrégées entres-elles, par exemple en générant une courbe représentative des valeurs maximales de ces fonctions d'appartenance écrêtées. Finalement, cette courbe représentative des valeurs maximales peut être utilisée dans l'étape de défuzzification 413. L'application par exemple d'un principe de centre de gravité sur les surfaces définies par cette courbe permet ainsi d'identifier la valeur numérique de l'abscisse HPP_$\Delta$F.

Finalement, et puisque le processeur flou 41 calcule la variation du signal de commande, la valeur numérique HPP_$\Delta$F obtenue en sortie du processeur flou 41 est intégrée en fonction du temps (i.e., temporellement sur une séquence de valeurs de sorties successives) grâce au module intégrateur 44, pour former le signal de consigne F_HPPn à appliquer à l'unité de production électrique 1 pour piloter sa contribution au réglage primaire de fréquence (FCR) du réseau électrique 3 (voir Figure 3). Cette intégration permet de mémoriser dans le temps le signal de consigne F_HPPn et de lui appliquer les variations de consigne issues du bloc de contrôle 41, dans le souci de la stabilité et de la précision du système de réglage du groupe de production.

Pour conclure, on appréciera que les modes de réalisation de l'invention décrits dans ce qui précède permettent, au niveau de l'unité de production électrique, de diminuer drastiquement l'usure des pièces mécaniques liée au réglage primaire de fréquence. En effet son implémentation sur un groupe de production hybride basée sur une unité de production hydroélectrique a permis de diminuer par un ratio de 20 les changements de direction des actionneurs des vannes 5 et des pales 6 du rotor de la turbine hydroélectrique 4, tout en permettant d'apporter plus de flexibilité et de rapidité dans la réponse apportée au titre de la contribution au réglage primaire de fréquence (FCR) du réseau électrique 3. De plus, il a pu être déterminé sur ce démonstrateur que des mises en œuvre de l'invention permettent d'améliorer les performances du réglage primaire de fréquence, d'un rapport égal à 10.

Ainsi, des simulations numériques et une mise en œuvre effectués sur une centrale hydraulique permettent d'apprécier le gain concernant les indicateurs de déplacement des actionneurs de la turbine, à savoir :

- gain sur la distance parcourue par les vannes (m) : -80% ;

- gain sur le nombre de changements de direction des vannes : -96% ;

- gain sur la distance parcourue par les pâles (m) : -77% ; et,

- gain sur le nombre de changements de direction des pâles -90%.

Différentes variantes et modifications possibles des modes de réalisation particuliers qui viennent d'être décrits apparaîtront à la personne de métier.

Notamment, il va sans dire que l'invention n'est pas limitée par le nombre de valeurs floues que peut prendre chacune des trois variables d'entrée et la valeur de sortie du calculateur en logique floue qui est implémenté dans le module de gestion 343 du contrôleur d'hybridation 34 proposé. Le nombre et la forme des fonctions d'appartenance correspondantes ne se limitent pas aux exemples donnés dans ce qui précède en référence à la figure 5, à la figure 6, à la figure 7, à la figure 8 et à la figure 9, respectivement. De même, le nombre N et la définition des règles d'inférence prises en compte dans le moteur d'inférence 412ne se limitent pas à l'exemple donné ici à titre purement illustratif en référence au tableau de la figure 8. Tous ces paramètres doivent être adaptés au problème traité, dans le contexte de chaque application concernée par la mise en œuvre de l'invention. Leur choix résulte de la connaissance *a priori* des caractéristiques et du fonctionnement du groupe de production d'énergie électrique concerné, et des contraintes qui lui sont applicables, tout ceci relevant du savoir-faire de la personne de métier.

En outre, le pilotage de l'unité de production d'énergie électrique 1 et de l'unité de stockage d'énergie 2, peut faire intervenir d'autres signaux que les trois signaux principaux ESS_SOC, $P_{ESS}$ et $dP_{HDD\_FCR}/dt$ considérés dans la description qui précède. Le cas échéant, la prise en compte d'un quatrième ou d'un nième signal pourra être effectué et intégré dans le raisonnement par logique flou. En d'autres termes, le processeur flou 41 de la figure 4 comprend au moins deux (car dans le cas où la capacité des batteries serait suffisante pour permettre à l'unité de stockage 1 de subvenir seule au service FCR dans 100% des cas, alors l'entrée $P_{ESS}$ n'aurait plus vraiment d'intérêt), et de préférence trois entrées, et peut en avoir quatre ou plus. De même, on peut prévoir d'autres processeurs flous comparables au processeur flou 41, pour traiter plus de variables d'entrée. Toutefois, et en dépit des avantages de ces modes de réalisation qui ont été exposés et qui sont liés à leur facilité de mise en œuvre opérationnelle, il ne s'agit que de modes de réalisation non indispensable.

## Revendications

1. Procédé de commande d'une puissance fournie à un réseau de distribution d'énergie électrique (3) sous une tension alternative de fréquence nominale déterminée, par un groupe de production d'énergie électrique comportant :

    - une unité de production d'énergie électrique (1) pilotable par un contrôleur (15) de régulation de l'énergie produite, ayant un temps de réponse relativement long à une variation de consigne de la puissance produite ($P_{HPP}$);
    - une unité de stockage d'énergie (2) pilotable, ayant un temps de réponse relativement court à une variation de consigne de la puissance stockée ou restituée ($P_{ESS}$), et utilisée pour le réglage primaire de la fréquence (FCR : « *Frequency Containment Reserve* ») de la tension alternative ; et,

- un contrôleur d'hybridation (34) configuré pour assurer la gestion du groupe de production électrique et sa contribution au réglage primaire de la fréquence de la tension alternative en fonction d'un signal (F_Grid) représentatif d'une déviation de ladite fréquence par rapport à la fréquence nominale, en pilotant la puissance ($P_{ESS}$) stockée ou restituée par l'unité de stockage d'énergie (2) à partir de la différence (342) entre la puissance de réglage primaire de fréquence ($P_{FCR}$) attendue du groupe de production au titre de sa contribution au réglage primaire de fréquence du réseau électrique (3) et de la puissance ($P_{HPP\_FCR}$) produite à ce titre par l'unité de production d'énergie électrique (1),

ledit procédé comportant les étapes suivantes, mises en œuvre dans le contrôleur d'hybridation (34) :

- acquisition d'un premier signal d'entrée (ESS_SOC) qui est représentatif de l'état de charge de l'unité de stockage d'énergie (2) ;
- acquisition d'un deuxième signal d'entrée ($P_{ESS}$) qui est représentatif de la puissance ($P_{ESS}$) stockée ou restituée par l'unité de stockage d'énergie (2) ;
- acquisition d'un troisième signal d'entrée ($DP_{HPP\_FCR}$/dt) qui est représentatif de la dérivée temporelle de la puissance ($P_{HPP\_FCR}$) produite par l'unité de production d'énergie électrique (1) au titre de sa contribution au réglage primaire de fréquence du réseau électrique (3) ;
- production d'un signal (F_HPPn) de la consigne de la puissance produite par l'unité de production d'énergie électrique (1) au titre de sa contribution au réglage primaire de fréquence du réseau électrique (3), ledit signal de consigne étant produit à l'aide d'au moins un processeur à inférences (41) à au moins trois entrées, en fonction du premier signal d'entrée (ESS_SOC), du deuxième signal d'entrée ($P_{ESS}$), et du troisième signal d'entrée ($DP_{HPP\_FCR}$/dt).

2. Procédé selon la revendication 1, dans lequel le processeur à inférences (41) met en œuvre :

- trois modules de fuzzification (411a, 411b, 411c) utilisant trois groupes de fonctions d'appartenance pour associer des valeurs d'entrée floues à des valeurs numériques normalisées (ESS_SOC_pu, $P_{ESS}$_pu, $dP_{HPP\_FCR}$_pu) du premier signal d'entrée (ESS_SOC), du deuxième signal d'entrée (PESS) et du troisième signal d'entrée ($DP_{HPP\_FCR}$/dt), respectivement,
- un moteur d'inférence (412), mettant en œuvre des règles d'inférence liant des triplets de valeurs d'entrée floues du premier signal d'entrée (ESS_SOC), du deuxième signal d'entrée ($P_{ESS}$) et du troisième signal d'entrée ($dP_{HPP\_FCR}$/dt), respectivement, à des valeurs de sortie floues respectives,
- un module de défuzzification (413) utilisant des fonctions d'appartenance pour associer les valeurs de sortie floues à des valeurs numériques de sortie (HPP_ΔF) respectives.

3. Procédé selon la revendication 2, dans lequel le signal (F_HPPn) de la consigne de la puissance produite par l'unité de production électrique (1) au titre de sa contribution au réglage primaire de fréquence du réseau électrique (3), est obtenu par intégration (44) en fonction du temps de valeurs numériques de sortie (HPP_ΔF) du processeur à inférences (41).

4. Procédé selon l'une quelconque des revendications 1 à 3, dans lequel la puissance ($P_{HPP\_FCR}$) produite par l'unité de production d'énergie électrique (1) au titre de sa contribution au réglage primaire de fréquence du réseau électrique (3) est déterminée sur la base d'un modèle simplifié (344) du comportement de ladite unité de production (1) en fonction du signal (F_HPPn) de consigne de la puissance produite par l'unité de production d'énergie électrique (1) au titre de sa contribution au réglage primaire de fréquence du réseau électrique (3) qui est appliqué à ladite unité de production (1).

5. Procédé selon la revendication 4, dans lequel le troisième signal d'entrée ($DP_{HPP\_FCR}$/dt) qui est représentatif de la dérivée temporelle de la puissance ($P_{HPP\_FCR}$) produite par l'unité de production d'énergie électrique (1), est obtenu par calcul à partir du modèle simplifié (344).

6. Procédé selon l'une des revendications 1 à 5, dans lequel, le signal (F_HPPn) de consigne de la puissance produite par l'unité de production d'énergie électrique (1) au titre de sa contribution au réglage primaire de fréquence du réseau électrique (3) est de même nature que le signal (F_Grid) représentatif d'une déviation de la fréquence du réseau électrique (3) par rapport à la fréquence nominale dudit réseau (3), de manière à pouvoir lui être substituable en entrée d'un contrôleur (15) de régulation de la puissance produite par ladite unité de production (1).

7. Procédé selon l'une des revendications précédentes, dans lequel l'un ou l'autre du signal (F_Grid) représentatif d'une déviation de la fréquence du réseau électrique (3) par rapport à la fréquence nominale et du signal (F_HPPn) de consigne de la puissance produite par l'unité de production d'énergie électrique (1) au titre de sa contribution au réglage primaire de fréquence du réseau électrique (3) est sélectivement reçu en entrée du contrôleur (15) de régulation de la puissance (P$_{HPP}$) produite par l'unité de production d'énergie électrique (1).

8. Dispositif de commande d'une puissance fournie à un réseau de distribution d'énergie électrique (3) sous une tension alternative de fréquence nominale déterminée, par un groupe de production d'énergie électrique comportant :

    - une unité de production d'énergie électrique (1) pilotable, ayant un temps de réponse relativement long à une variation de consigne de la puissance produite (P$_{HPP}$);
    - une unité de stockage d'énergie (2) pilotable, ayant un temps de réponse relativement court à une variation de consigne de la puissance stockée ou restituée (P$_{ESS}$), et utilisée pour le réglage primaire de la fréquence (FCR : « *Frequency Containment Reserve* ») de la tension alternative ; et,

ledit dispositif comportant :

    - un contrôleur (15) de régulation de l'énergie produite par l'unité de production d'énergie électrique (1) ; et,
    - un contrôleur d'hybridation (34) configuré pour assurer la gestion du groupe de production électrique et sa contribution au réglage primaire de la fréquence de la tension alternative en fonction d'un signal (F_Grid) représentatif d'une déviation de ladite fréquence par rapport à la fréquence nominale, en pilotant la puissance (P$_{ESS}$) stockée ou restituée par l'unité de stockage d'énergie (2) à partir de la différence (342) entre la puissance de réglage primaire de fréquence (P$_{FCR}$) attendue du groupe de production au titre de sa contribution au réglage primaire de fréquence du réseau électrique (3) et de la puissance (P$_{HPP\_FCR}$) produite à ce titre par l'unité de production d'énergie électrique (1), ledit contrôleur d'hybridation (34) comprenant au moins un processeur à inférences (41) à au moins trois entrées et étant configuré pour :

      • recevoir en entrée un premier signal d'entrée (ESS_SOC) qui est représentatif de l'état de charge de l'unité de stockage d'énergie (2) ;
      • recevoir en entrée un deuxième signal d'entrée (P$_{ESS}$) qui est représentatif de la puissance (P$_{ESS}$) stockée ou restituée par l'unité de stockage d'énergie (2) ;
      • recevoir en entrée un troisième signal d'entrée (dP$_{HPP\_FCR}$/dt) qui est représentatif de la dérivée temporelle de la puissance (P$_{HPP\_FCR}$) produite par l'unité de production d'énergie électrique (1) au titre de sa contribution au réglage primaire de fréquence du réseau électrique (3) ;
      • produire en sortie un signal (F_HPPn) de consigne de la puissance produite par l'unité de production d'énergie électrique (1) au titre de sa contribution au réglage primaire de fréquence du réseau électrique (3), ledit signal de variation de consigne étant produit à l'aide du processeur à inférences (41) ayant au moins trois entrées, en fonction du premier signal d'entrée (ESS_SOC), du deuxième signal d'entrée (P$_{ESS}$) et du troisième signal d'entrée (dP$_{HPP\_FCR}$/dt), respectivement.

9. Dispositif selon la revendication 8, dans lequel le processeur à inférences (41) comprend :

    - trois modules de fuzzification (411a,411b,411c) utilisant trois groupes de fonctions d'appartenance pour associer des valeurs d'entrée floues à des valeurs numériques normalisées (ESS_SOC_pu, P$_{ESS}$_pu, dP$_{HPP\_FCR}$_pu) du premier signal d'entrée (ESS_SOC), du deuxième signal d'entrée (P$_{ESS}$) et du troisième signal d'entrée (DP$_{HPP\_FCR}$/dt), respectivement ;
    - un moteur d'inférence (412), mettant en œuvre des règles d'inférence liant des triplets de valeurs d'entrée floues du premier signal d'entrée (ESS_SOC), du deuxième signal d'entrée (P$_{ESS}$) et du troisième signal d'entrée (dP$_{HPP\_FCR}$/dt), respectivement, à des valeurs de sortie floues respectives ; et,
    - un module de défuzzification (413) utilisant des fonctions d'appartenance pour associer les valeurs de sortie floues à des valeurs numériques de sortie (HPP_ΔF) respectives.

10. Dispositif selon la revendication 9, dans lequel le contrôleur d'hybridation (34) comprend un intégrateur (44) configuré pour produire le signal (F_HPPn) de la consigne de la puissance produite par l'unité de production électrique (1) au titre de sa contribution au réglage primaire de fréquence du réseau électrique (3), par intégration en fonction du temps de valeurs numériques de sortie (HPP_ΔF) du processeur à inférences (41).

11. Dispositif selon l'une quelconque des revendications 8 à 10, dans lequel la puissance (P$_{HPP\_FCR}$) produite par l'unité de production d'énergie électrique (1) au titre de sa contribution au réglage primaire de fréquence du réseau électrique (3) est déterminée sur la base d'un modèle simplifié (344) du comportement de ladite unité de production (1) en fonction du signal (F_HPPn) de consigne de la puissance produite par l'unité de production d'énergie électrique (1) au titre de sa contribution au réglage primaire de fréquence du réseau électrique (3) qui est appliqué à ladite unité de production (1).

12. Dispositif selon la revendication 11, dans lequel le troisième signal d'entrée ($dP_{HPP\_FCR}$/dt) qui est représentatif de la dérivée temporelle de la puissance ($P_{HPP\_FCR}$) produite par l'unité de production d'énergie électrique (1), est obtenu par calcul à partir du modèle simplifié (344).

13. Dispositif selon l'une des revendications 8 à 12, dans lequel le signal (F_HPPn) de consigne de la puissance produite par l'unité de production d'énergie électrique (1) au titre de sa contribution au réglage primaire de fréquence du réseau électrique (3) est de même nature que le signal (F_Grid) représentatif d'une déviation de la fréquence du réseau électrique (3) par rapport à la fréquence nominale dudit réseau (3), de manière à pouvoir lui être substituable en entrée d'un contrôleur (15) de régulation de la puissance produite par ladite unité de production (1).

14. Dispositif selon la revendication 13, comprenant en outre un sélecteur (151) configuré pour fournir l'un ou l'autre du signal (F_Grid) représentatif d'une déviation de la fréquence du réseau électrique (3) par rapport à la fréquence nominale et du signal (F_HPPn) de consigne de la puissance produite par l'unité de production d'énergie électrique (1) au titre de sa contribution au réglage primaire de fréquence du réseau électrique (3), en entrée du contrôleur (15) de régulation de la puissance ($P_{HPP}$) produite par l'unité de production d'énergie électrique (1).

15. Groupe de production d'énergie électrique adapté pour fournir ladite énergie électrique produite à un réseau de distribution d'énergie électrique (3) sous une tension alternative de fréquence nominale déterminée, ledit groupe comportant :

    - une unité de production d'énergie électrique (1) pilotable, ayant un temps de réponse relativement long à une variation de consigne de la puissance produite ($P_{HPP}$) ;
    - une unité de stockage d'énergie (2) pilotable, ayant un temps de réponse relativement court à une variation de consigne de la puissance stockée ou restituée ($P_{ESS}$), et utilisée pour le réglage primaire de la fréquence (FCR : « *Fre-*

quency Containment Reserve ») de la tension alternative ; ainsi que,
- un dispositif de commande de la puissance fournie au réseau de distribution d'énergie électrique (3) selon l'une quelconque des revendications 8 à 14.

**Fig.1**

**Fig.2**

**Fig.3**

**Fig.4**

**Fig.5**

**Fig.6**

**Fig.7**

| Entrées floues | | | | Sortie floue |
|---|---|---|---|---|
| **ESS_SOC_pu** | **$P_{ESS}$_pu** | **$dP_{HPP\_FCR}$_pu** | **Effet attendu** | **HPP_ΔF** |
| VeryHigh | ChargeHigh | | *Décharge rapide ESS* | IncreaseHigh |
| VeryHigh | ChargeLow | | *Décharge rapide ESS* | IncreaseMed |
| VeryHigh | Zero | | *Décharge lente ESS* | IncreaseLow |
| VeryHigh | DischargeLow | | *Aucun changement* | Zero |
| VeryHigh | DischargeHigh | | *Aucun changement* | Zero |
| High | ChargeHigh | | *Décharge rapide ESS* | IncreaseMed |
| High | ChargeLow | | *Décharge lente ESS* | IncreaseLow |
| High | Zero | | *Aucun changement* | Zero |
| High | DischargeLow | | *Aucun changement* | Zero |
| High | DischargeHigh | | *Aucun changement* | Zero |
| OK | ChargeHigh | | *Décharge lente ESS* | IncreaseLow |
| OK | ChargeLow | | *Aucun changement* | Zero |
| OK | Zero | | *Aucun changement* | Zero |
| OK | DischargeLow | | *Aucun changement* | Zero |
| OK | DischargeHigh | | *Charge lente ESS* | DecreaseLow |
| Low | ChargeHigh | | *Aucun changement* | Zero |
| Low | ChargeLow | | *Aucun changement* | Zero |
| Low | Zero | | *Aucun changement* | Zero |
| Low | DischargeLow | | *Charge lente ESS* | DecreaseLow |
| Low | DischargeHigh | | *Charge rapide ESS* | DecreaseMed |
| VeryLow | ChargeHigh | | *Aucun changement* | Zero |
| VeryLow | ChargeLow | | *Aucun changement* | Zero |
| VeryLow | Zero | | *Charge lente ESS* | DecreaseLow |
| VeryLow | DischargeLow | | *Charge rapide ESS* | DecreaseMed |
| VeryLow | DischargeHigh | | *Charge rapide ESS* | DecreaseHigh |
| | ChargeHigh | IncreaseHigh | *Diminuer fortement $P_{HPP}$* | IncreaseHigh |
| | ChargeLow | IncreaseHigh | *Diminuer modérement $P_{HPP}$* | IncreaseMed |
| | DischargeLow | DecreaseHigh | *Augmenter modérement $P_{HPP}$* | DecreaseMed |
| | DischargeHigh | DecreaseHigh | *Augmenter fortement $P_{HPP}$* | DecreaseHigh |

**Fig.8**

**Fig.9**

**EP 4 651 333 A1**

Europäisches Patentamt

European Patent Office

Office européen des brevets

# RAPPORT DE RECHERCHE EUROPEENNE

Numéro de la demande

EP 25 17 4057

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | FR 3 131 473 A1 (COMMISSARIAT ENERGIE ATOMIQUE [FR]) 30 juin 2023 (2023-06-30) <br> * abrégé * <br> * revendications 1,10-15 * <br> * alinéa [0015] * <br> * alinéas [0064] - [0084] * <br> * figure 1 * <br> ----- | 1-15 | INV. <br> H02J3/24 <br> H02J3/32 <br> H02J3/38 <br> H02J3/48 |
| A,D | FR 3 131 474 A1 (COMMISSARIAT ENERGIE ATOMIQUE [FR]) 30 juin 2023 (2023-06-30) <br> * abrégé * <br> * revendications 1,2,3,11-16 * <br> * figure 1 * <br> ----- | 1-15 | |
| A | CN 113 572 176 A (UNIV TSINGHUA ET AL.) 29 octobre 2021 (2021-10-29) <br> * abrégé * <br> * revendications 1,2,3,7,8 * <br> ----- | 1-15 | |
| A | US 2017/045902 A1 (PATIL RAKESH [US] ET AL) 16 février 2017 (2017-02-16) <br> * abrégé * <br> * alinéa [0037] * <br> * revendications 1,2,3 * <br> ----- | 1-15 | DOMAINES TECHNIQUES RECHERCHES (IPC) <br><br> H02J |
| A | WO 2023/111166 A1 (ELECTRICITE DE FRANCE [FR]) 22 juin 2023 (2023-06-22) <br> * abrégé * <br> * revendications 1-21 * <br> ----- | 1-15 | |

Le présent rapport a été établi pour toutes les revendications

| Lieu de la recherche | Date d'achèvement de la recherche | Examinateur |
|---|---|---|
| Munich | 29 septembre 2025 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 25 17 4057**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**29-09-2025**

| Document brevet cité au rapport de recherche | | | Date de publication | Membre(s) de la famille de brevet(s) | | Date de publication |
|---|---|---|---|---|---|---|
| FR 3131473 | A1 | | 30-06-2023 | EP | 4203228 A1 | 28-06-2023 |
| | | | | FR | 3131473 A1 | 30-06-2023 |
| | | | | US | 2023275431 A1 | 31-08-2023 |
| FR 3131474 | A1 | | 30-06-2023 | EP | 4203227 A1 | 28-06-2023 |
| | | | | FR | 3131474 A1 | 30-06-2023 |
| | | | | US | 2023283077 A1 | 07-09-2023 |
| CN 113572176 | A | | 29-10-2021 | AUCUN | | |
| US 2017045902 | A1 | | 16-02-2017 | AUCUN | | |
| WO 2023111166 | A1 | | 22-06-2023 | FR | 3131118 A1 | 23-06-2023 |
| | | | | FR | 3131120 A1 | 23-06-2023 |
| | | | | WO | 2023111166 A1 | 22-06-2023 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2139090 A1
- WO 2012177633 A2
- EP 2721710 A
- FR 3131473
- FR 3131474
- CN 113572176
- US 2017045902 A1
- WO 2023111166 A1

**Littérature non-brevet citée dans la description**

- **C. JIN** ; **N. LU** ; **S. LU** ; **Y. MAKAROV** ; **R. A. DOUGAL**. Coordinated control algorithm for hybrid energy storage systems. *2011 IEEE Power and Energy Society General Meeting, Detroit, MI, USA*, 2011, 1-7

- **RITU RAJ SHRIVASTWA** ; **AHMAD HABLY** ; **SEDDIK BACHA** ; **HUGO MESNAGE** ; **RENAUD GUILLAUME**. An overview of Hybridization of Power sources for Ancillary Service. *ICIT 2020 - IEEE International Conference on Industrial Technology*, February 2020